# EUROPEAN PATENT SPECIFICATION

(11) **EP 4 308 897 B1**
(45) Date of publication and mention of the grant of the patent: **18.12.2024**
(21) Application number: 22772883.9
(22) Date of filing: 31.08.2022
(51) Int. Cl.: G01M 7/08, A62C 3/06, G06F 30/13, G06Q 10/06, G06Q 10/04

(54) **MAXIMUM IMPACT MEASURING AND FORECAST SYSTEM FOR EXPLOSIONS IN OPEN STEEL AND/OR CONCRETE STRUCTURES AND METHOD THEREOF**
SYSTEM ZUR MESSUNG UND VORHERSAGE DER MAXIMALEN AUSWIRKUNG AUF EXPLOSIONEN IN OFFENEN STAHL- UND/ODER BETONSTRUKTUREN UND VERFAHREN DAFÜR
SYSTÈME DE MESURE ET DE PRÉVISION D'IMPACT MAXIMAL POUR EXPLOSIONS DANS DES STRUCTURES EN ACIER SEMI-CALMÉ ET/OU EN BÉTON ET PROCÉDÉ ASSOCIÉ

(30) Priority: 31.08.2021 CH 0702202021
(43) Date of publication of application: 24.01.2024
(73) Proprietor: Swiss Reinsurance Company Ltd., 8022 Zürich (CH)
(72) Inventor: KOCHER, Thomas, 8057 Zürich (CH); BACON, Roger, Maidenhead Berkshire SL6 4TB (GB)
(74) Representative: Leimgruber, Fabian Alfred Rupert
(86) International application number: PCT/EP2022/074247
(87) International publication number: WO 2023/031299

(56) References cited:
- US-A- 6 117 178
- US-A1- 2020 293 964
- TAUSEEF S M ET AL: "Chemical Accident Simulation Tool (CAST): A System for Assessing Consequences of Accidents in Chemical Process Industry", JOURNAL OF FAILURE ANALYSIS AND PREVENTION, SPRINGER, BOSTON, vol. 18, no. 1, 9 January 2018 (2018-01-09), pages 101 - 116, XP036422870, ISSN: 1547-7029, [retrieved on 20180109], DOI: 10.1007/S11668-018-0386-8
- ZHOU SHENNAN ET AL: "A fusing NS with NN model for the consequence prediction of vapor cloud explosion", PROCESS SAFETY AND ENVIRONMENTAL PROTECTION, INSTITUTION OF CHEMICAL ENGINEERS, RUGBY, GB, vol. 149, 22 March 2021 (2021-03-22), pages 698 - 710, XP086556974, ISSN: 0957-5820, [retrieved on 20210322], DOI: 10.1016/J.PSEP.2021.03.023
- TAUSEEF S M ET AL: "A method for simulation of vapour cloud explosions based on computational fluid dynamics (CFD)", JOURNAL OF LOSS PREVENTION IN THE PROCESS INDUSTRIES, ELSEVIER, UNITED KINGDOM, vol. 24, no. 5, 21 May 2011 (2011-05-21), pages 638 - 647, XP028259302, ISSN: 0950-4230, [retrieved on 20110530], DOI: 10.1016/J.JLP.2011.05.007
- BESHARA F B A: "00457949(93)EOO43-N MODELLING OF BLAST LOADING ON ABOVEGROUND STRUCTURES-I. GENERAL PHENOMENOLOGY AND EXTERNAL BLAST", COMPUTERS & STRUCTURES, vol. 51, no. 5, 3 June 1994 (1994-06-03), Great Britain, pages 585 - 596, XP093005884, Retrieved from the Internet <URL:https://www.sciencedirect.com/science/article/pii/0045794994900663/pdf?md5=ca4f79789688d8bb471db8c60020f76e&pid=1-s2.0-0045794994900663-main.pdf> [retrieved on 20221207], DOI: https://doi.org/10.1016/0045-7949(94)90066-3

## Description

### Field of the Invention

The present invention relates to systems, and methods for quantified maximum impact measurand value forecast for explosions in open steel structures based on measured measuring values. The present invention also relates to quantitative automated danger and risk measurand prediction and/or simulation systems and methods measuring quantified impact strength measuring parameter values. In particular, it also relates to automated maximum impact measurement based on one or more links with physical reality using sensory and measuring devices and data. More particularly, the invention also relates to automated measuring and assessing of riskquantifying measures, financial and physical damage, and replacement costs of industrial processing facilities, such as refinery process units, complete refineries, gas plants, petrochemical plants, chemical plants, steam crackers and others in case of occurring loss events. Finally, the invention relates to measuring and/or forecast systems for determining the effects of explosive loadings on the local damage of open steel structures and/or concrete based structures, inter alia, using various load measuring parameters, like the amount or the measured distance of the explosive, and resistance parameters, like the structural member thickness or the characteristics of the steel or concrete material. The forecast and/or measuring system should be able to cope with possible dependencies of these parameters providing a reliable determination of quantitative damage measurands or vice versa for the dimensioning of load and/or resistance parameters.

### Background of the Invention

Considering structures, as industrial or protective structures, most industrial or protective (e.g. military) building constructions are made of steel and/or reinforced concrete. The latter is usually realized by reinforcing bars of steel are embedded into concrete to combine the compressive strength of concrete and the tensile strength of steel. In order to determine the local damage due to any explosive loading situation, elaborate and expensive measuring experiments and/or complex numerical simulations traditionally have to be done. Both approaches are often inappropriate for industrial, military, service industry, and financial industry applications purposes and practical use because they are time consuming and technically unsuitable for field use.

Various prior art systems are based on the measuring of possibly significant loading and resistance parameters and their influence on the local damage dimensions. The significance of these parameters is typically verified by experimental measuring values. Such measuring data allow also to calibrate a predictive modelling of forecasting simulation structure. Exemplary loading parameters and resistance parameters are listed in table 1 parameterizing the material properties and the geometry of the structural member.

**(Table 1: Exemplary loading parameters and resistance parameters)**

| **Loading parameter** / **Measuring dimension** | **Resistance parameter / Measuring dimension** |
|---|---|
| Amount of explosive | Material strength (concrete/steel strength) |
| TNT equivalent | Material density (concrete)/material composition (steel) |
| Diameter/height ratio | Steel fiber content (concrete) |
| Ignition point position | Bar diameter |
| Geomaterial as casing | Mesh size/bar distance |
| Geomaterial as cover of plate | Concrete/steel cover |

The consideration of the earth cover (table 1, geomaterial as casing and as cover of plate) plays a separate role. The geomaterial beside and above the explosive may act like a casing material, while the geomaterial between the explosive and the concrete structure may attenuate the explosive effects. The measuring data and an appropriate damage modelling/forecast structure for parameter value processing are the core of the data processing engine.

Simplified forecast systems are mainly based on propagating the shock wave generated by the detonation of civil or military use explosives. There is a difference, if the detonation process takes place in an obstacle-free field, or the area has obstacles such as rocks, metals structures, wood etc., obstacles that can and will influence the final results, the shock wave curve being obturated by it. Shock waves that appears after the detonation of an explosive material and can be characterized in coordinated quantity explosive (W) and distance (R) from the following measurable parameters: maximum pressure (overpressure) and dynamic pressure, incident and reflected pressure, incident and reflected pulse, the arrival time of the wave front, the speed of the wave front, etc. In the processing chain, the measured coordinate values of the explosive quantity - distance (WR) can be linked by using a so called Hopkinson-Cranz scaling, with *R₁*/*R₂* = *(W₁*/*W₂)*^{*1*/*3*}. R is the distance from the place of the explosion and to the place where the respective parameter is measured (e.g. maximum pressure). *W* coordinate represents the amount of TNT equivalent (Tri-Nitro-Toluene) of the explosive material, which was used in detonation.

The measured equivalence between the mass of an explosive material - Mₑₓₚ and the reference mass TNT - M_{TNT} is based on the thermal energy ratio (E^{d}ₑₓₚ and E^{d}_{TNT}) released by the combustion reaction when detonating explosive materials, as M_{TNT}= (E^{d}ₑₓₚ/E^{d}_{TNT}) × Mₑₓₚ. The shock wave produced by an explosion may have a spherical geometry, if the explosion occurred in the air at a considerable distance from the surface of the soil and a hemispherical geometry, if the explosion occurred on the surface of the soil or in its immediate vicinity. In case of shock waves with hemispherical geometry, a wave front reflected by the surface of the ground also appears, besides the incident wave front. Also, the reflection of the shock waves can also occur at the interface between the air and the exterior or interior rigid surfaces of some civil constructions (e.g. walls, monuments, etc.).

At a certain distance from the blast site, shock waves typically have a general profile, where Pₘₐₓ is the maximum value of the pressure (overpressure) that is reached in an extremely short time and then descends until it reaches the reference Pₒ value of atmospheric pressure. Besides the positive phase, a shock wave profile also has a negative phase in which the pressure value decreases below that of the atmospheric pressure to a minimum value, Pₘᵢₙ. The duration of the positive phase is noted with t_{d}, tₐ, being the time when the shock wave front reaches that point and which also includes the duration of the detonation process. The duration of the negative phase is noted by tₙ.

In the prior art systems, measurement values are typically fitted with polynomial functions trying to capture and parameterize effects produced by a shock wave in relation to the explosive mass and the distance at which the impact object is situated. For the shock wave with spherical symmetry the characteristic parameters are typically determined using a polynomial parameter relation with P₀=C₀+C₁U+C₂U²+....CₙUⁿ where P is typically logarithm linked based on parameters as e.g. pressure, impulse, C_{0,1,2 ...n} are constant and U = K₀ + In (K₁xZ), with K_{0,1} being a constant. For all prior art systems, knowing the maximum values for the air pressure wave is important for the preliminary assessment of forecast of the effects of an explosion with detonation (by energetic relation to the TNT equivalent) on a structure or on people. Such quantitative measurands are important for risk measurements, impact strength forecast or also by for investigations for elucidating the causes of industrial, domestic, or military explosions. In all prior art systems, for measuring and/or forecasting the quantitative damage or impact strength by measuring parameter processing using automated forecast systems (e.g. computer based), these systems need to be calibrated on physical modelling processes with a measuring link to the real world. For improving the measured damage strength having a high degree of accuracy, the energetic value of the explosion, going in the opposite direction, expresses quantitatively the combustible substance that was involved in a specific explosion.

The petroleum processing facilities share their inherent safety problems with many other industrial facilities. The raw material as well as almost all of the products are highly flammable, can give rise to vapor cloud explosions (VCEs), and may be toxic above a certain threshold value. Much of the processing, as well as storage, is done under higher than ambient pressure, not uncommonly above 10 bars, and/or at higher than ambient temperature. This ensures that loss of confinement will lead to rapid discharge rates. In addition to the threat to the workforce and equipment, an operational risk is associated with processing flammable compounds not only due to the direct impact of a fire or explosion but also the cost of operation interruption in case of a shutdown of the plant or refinery. In many cases the operation interruption after an accident is much more expensive than the actual repair costs due to a fire or explosion.

To minimize such an impacting damage, there are various ways, i.e. by improving the passive or operational safety of the industrial structure, or by mitigating possible damage impact to third systems. All of these three processes require accurate quantitative forecast values. The forecasting often requires considering various scenarios to determine to which extent the process area can be damaged. On the extreme end of modelling, the so-called Maximum Loss (ML) scenarios are found. There are various maximum loss measures used (EML, MPL, PML...) addressing the same zone of the loss spectrum, however differing slightly on the assumptions. These modeling structures try to predict the maximum loss a particular installation can sustain due to an occurring accident event. Unfortunately the prior art explosion modeling systems are by no means perfect. The forecasting systems are occasionally off considerably, regardless of its being empirical modeling structures or computational-based fluid dynamics structures are used.

In General, conventional risk measurements and assessment for an industry, industrial activity or plant may involve internal risk analysts often in combination with external risk advisory services and consultants (collectively risk analysts). The risk analysts identify risk threats that may be relevant to a specific situation, e.g., risks to petrochemical resource production in a selected locale. Industries and economic systems in general are typically affected with heterogeneous complex risk threats and exposed to various kinds of events whose occurrence can impact the operation of the industrial plant or business and/or damage and disrupt businesses evolving from the industrial activities. Moreover, in the current age of globalization and interconnectedness businesses increasingly are exposed to new types of risks. In petrochemical industry, an oil and gas company, for example, may be evaluating a new activity opportunity, such as an oil field development project in a country where the company has no prior experience. Beyond the inherent uncertainty in oil field geophysical properties, there are other inherent risks that may interfere with production. These inherent risks may include, for example, geopolitical conflicts, natural hazards, and nationalization of the energy industry.

The risk analysts must first identify any pertinent risks in a given opportunity. Next, the risk analysts typically use the identified risks to construct a model that models the opportunity as a generic stochastic process and quantifies the risk analysts' beliefs about, and the potential impacts of, those risks. Currently, constructing such a model is laborious and expensive. The risk analysts must use complex analytical methods to construct the model, even when the risks are well known and well understood. Unfortunately, risk analysts frequently are insufficiently familiar with the complex modelling methods and underlying physics of the possibly impacting events, which both are needed to model and parameterize the opportunity as a generic stochastic process. This lack makes a comprehensive risk assessment a daunting task. Further, new risk types make conducting a comprehensive and standardized risk analysis for any business opportunity even more challenging.

Thus, there is a need for a technical-means-based automated risk measuring and assessment system in the context of the operation of industrial plants or other industrial operations or business activities over a selected time-frame. In particular, there is a need for providing staff and decision makers in economic sectors dealing with the petro-chemical industry, as well as workers or operators in the petro-chemical industry, who may even be unfamiliar with complex assessment or analytical measuring methods, as e.g. complex/fluid dynamics modeling and measuring structures, with a flexibility and ease to use measuring and assessment device for quantified risk measurement and assessment in oil and petro-chemical field development that does not require risk analysis to stochastically model field production risks during the life-time of the project. Even more particular, there is a need for a measuring and prediction system providing maximum possible loss measures for explosions in open steel structures.

Again, it is important to note that there are many kinds of equipment in petroleum processing plants (such as petrochemical plants and petroleum refineries), usually presenting complex structures and numerous parameters. In such plants, it is important to consider different and critical types of risks, such as explosions, fire and toxic release which may cause serious dam-age either to human lives or to the environment. Fires and explosions are potential initiators of major accidents in these industry installations. In petrochemical industry, explosion risk must be analyzed for a number of scenarios in the plant, and all tools must be used to minimize this threat. The quantitative risk measurement, in essence, should predict the extent and movement of the gas cloud and provide the predicted overpressures generated and/or damage caused if the cloud is ignited inside a built-up area. Since real processes are not always operated within the control range because an abnormal situation happened, accidents may occur such as valve damage, pump damage and pipe leak-age. There is a technical need for an automated system for identifying and monitoring hazards and problems which prevent efficient operation. Once the hazards, problems, and scenarios are identified, possible solutions and modifications can be proposed to avoid and get rid of these hazards and problems. Failure Mode and Effect Analysis (FMEA) or HAZard and Operability (HAZOP) method allows the determination of a wide range of failure modes, causes and consequences of each component in the process and the localization of the damage. There is a need for an automated risk measuring and assessment system enabling to combine prior art methods and assessing the consequences of the accident scenarios. The combination should enable to localize the problem and its cause in every component, besides fastening hazards identification. Traditional risk analysis has been a time consuming and error prone task. Many automated, prior-art tools for risk measurement and assessment exist. However, this method cannot localize exactly the failure, or simulate the accident scenario when it is important to predict the release rate of hazardous material, the flashing degree, and the evaporation rate, into techniques and methodologies for risk analysis in chemical process industries. Other systems allow to make a rapid and quantitative risk assessment of a typical petroleum refinery, and quantify the accident consequences, but without being able to propose any expert recommendations helping the operators to make a decision. There is a need to develop a more global risk identification, measuring, accident simulation and potential damage prediction system in operating petrochemical plants. The system should be able to automatically provide recommendations allowing the increase in system reliability and safety.

In the prior art, the document US 6,117,178A discloses a system which assesses explosion consequences for facilities, such as chemical processing plants, petroleum refineries, and other various types of factories and facilitates. The system provides modeling and simulating for both, explosion blasts and structural damages. The system allows automating assessments, which normally include time consuming calculations. Further, the system allows considering on explosion hazard parameters such as explosion energy, flame speed, or location of the explosion center which required significant recalculation before if any of these parameters were changed. A user selects a combination of hazards and buildings which are of interest in modeling and simulating potential explosions. The system then calculates distance and orientation of various building surfaces from the hazard, and accounts for side-on and reflected loads based on the orientation. The user is then with the pressure-impulse diagrams (p-i diagrams) where the system determines the damage expected for each building component. The results are displayed in a table which gives the applied blast load and damage level for each component on each building surface. Further, there are various prior art simulation systems allowing to assess explosion impacts on objects and facilities. Example of such prior art systems are e.g. given by Tauseef S.M. et al. "Chemical Accident Simulation Tool (CAST): A System for Assessing Consequences of Accidents in Chemical Process Industry", Journal of failure analyses and prevention, vol. 18, no. 1, 2018, p. 101-116; Zhou Shennan et al. "A fusing NS with NN model for the consequence prediction of vapor cloud explosion", Process safety and Environmental protection, institution of chemical engineers, vol. 149, 2021, p. 698-710; Tauseef S.M. et al. "A method for simulation of vapour cloud explosions based on computational fluid dynamics (CFO)", Journal of loss prevention in the process industries, vol. 24, no. 5, 2011, p. 638-647; and Beshara F.B.A.: "00457949 (93) E0043-N Modelling Of Blast Loading On Above Ground Structures-I. General Phenomenology And External Blast", Computers & Structures, vol. 51, no. 5, 1994, p. 585-596; Finally, the prior art document US 2020/293964 A1 shows an automated simulation systems allowing to generate event impacts in complex environmental interactions of the event, and in particular for clash events.

### Summary of the Invention

In the petro-chemical industry, vapour cloud explosions, high pressure ruptures, and fires have the greatest potential to cause property damage, business interruption and liability losses. In particular, explosions are the primary cause of major incidents in the oil and petrochemical industries, where vast inventories of flammable materials and extreme process conditions lead to high loss potential. Given the trend in these industries towards even larger, more complex and integrated installations, this loss potential is inclined to increase in the future. As such, it is an object of the present invention to develop measuring systems for measuring, estimating, and predicting the physical and, in particular, financial impact of a major explosion, e.g. based on appropriate prediction structures as TNT explosion modelling. The financial impact should be provided as monetary loss equivalent measurand expressed by the physical impact. The system should be able to relieve an operator or the like of the need to handle complex pressure measures, but providing a calibrated, direct link between a measurable explosion potential and physical and/or financial impact measurands. There is also a need for a conceptually simple and highly transparent technical measuring system to quantified measuring such predictions. The predictions should e.g. be calibratable against actual large losses. Finally, the measuring system should be technically enabled to measure and predict replacement costs of refinery process units quantifying the physical impact to the refineries or plants, such as complete refineries, petrochemical plants and steam crackers. In general, it is one object of the present invention to provide an automated danger and risk-measuring and prediction system providing quantified impact strength measuring parameter values for defined future time windows.

According to the present invention, these objects are achieved with the features of independent claim 1. In addition, further advantageous embodiments can be derived from the dependent claims and the related descriptions.

According to the present invention, the above-mentioned objects for an automated maximum impact measurand forecasting system for measuring an impact of an explosion of an explosive in open steel and/or concrete and/or reinforced concrete structures and method thereof are, in particular achieved in that at least loading and/or resistance measuring parameter values are measured and/or captured by the automated forecasting system, wherein the loading parameters characterizing the explosive at least comprise amount of explosive and/or TNT equivalent of explosive and/or diameter and/or height ratio and/or ignition point position and/or geomaterial as casing and/or geomaterial as cover of plate, and wherein the resistance parameters characterizing the object or structure at least comprise material and/or material strength and/or material density / material composition and/or steel fiber content of concrete and/or bar diameter and/or mesh size / bar distance and/or concrete/steel cover, in that the automated system comprises a data acquisition unit capturing loading and/or resistance parameter from measuring and sensory devices and/or internal or external databases, the loading and resistance parameters at least comprising object/structure location parameters and explosive location parameters and/or maps/geometry parameters and/or amount of explosive and/or TNT equivalent of explosive, in that the automated system comprises a vapor cloud explosions (VCE) forecasting engine comprising a material database at least comprising properties parameters of explosives possibly involved in explosions and tank fires, forecasting values for the drift of vapor cloud explosions based on geometrical details of obstacles likely to be encountered by the vapor cloud and forecasted turbulence parameters associated with the obstacles, in that the automated system comprises a ruptures of high-pressure equipment (HPR) simulation engine, the ruptures at least relating to ruptures associated with high pressure vessels at least based on the materials and/or topology and/or process techniques and/or composite lay-up and/or winding angles of the high pressure vessels, in that the automated system comprises c thermal radiation (TR) forecast engine, wherein, for the modelling process of the thermal radiation, the thermal radiation (TR) forecast engine generates concentric circles of constant heat radiation intensities allowing for the assessment of fire propagation and/or radiation intensity, wherein the lines of constant heat radiation intensities are generated concentric circles of constant heat radiation intensities. The material parameters can e.g. at least comprise open steel and/or concrete and/or reinforced concrete and/or wood type and/or brick type and/or stone type. Thus, the present invention has, inter alia, the advantage that the present inventive system allows to technically provide a user with transparent and easy-to-use modeling to quantitatively measure and assess a loss potential associated with vapor cloud explosions (VCE) and ruptures of high-pressure equipment (HPR). The data processing modeling structure can either be used to measure the overpressure resulting from a VCE or an HPR, or can be combined with a distribution of property values from the process plant in question to yield an explosion loss estimate in monetary terms. The present inventive measuring system allows to focus the measurement on quantitative damage measurands to property, offering a user-friendly working environment to: (i) assess the blast effect of a potential explosion, (ii) assess the severity of a potential tank fire, (iii) draft distribution of known monetary values on site plans, (iv) determine monetary losses caused by an explosion and extrapolate maximum possible loss (MPL) values from those figures in turn, (v) visualize results in a variety of ways, and (vi) document scenarios including the addition of fire following, debris removal and cost increase during time of rebuild. Further, (vi) buildings, units and tank farms can be digitally represented as polygons, rectangles and circles and be translucent or transparent, (vii) a large database of digital properties of materials involved in explosions and tank fires . A conservative thermal radiation model generating concentric circles of constant heat radiation intensities, allows for the assessment of fire propagation and offers safety zone estimates for approach and access by fire fighters, (viii) system provides the ability to scan and import a plan or image of the site, incl. *.dwg, *bmp, *jpg, *tif, *.tiff, *.gif and EML5.0 files. A digitizing device can still be used to define site layouts, if required, the site plan and results can be exported, (ix) lash fraction computation, incl. mixtures, (x) The system allows to provide release rate generation, (xi) The system allows to provide vessel size estimation, based on unit throughputs, for projects and construction risks, (xii) The system allows to provide vessel volume generation and measurements for spherical, cylindrical vessels with different end covers, (xiii) The system allows to provide estimation of the vapor cloud mass following a spill of refrigerated, high vapor pressure hydrocarbons, such as propane or LNG ("LNG spill"). The effect of various substrates can be accounted for, and (xiv) The system allows to integrate a wide range of graphical options. Thus, the system allows to convert the energy contents of either a VCE or an HPR into an equivalent mass of TNT. From this TNT mass, radial values corresponding to a given overpressure value can be generated. The present system provides usage of three such radial values, correlating the overpressures with average damage degrees of 80%, 40% and 5% respectively. Finally, the circular damage areas can be combined with a distribution of values for the plant in question. An automatic drift of the vapor cloud to the area of highest value concentration allows to determine the location of the maximum possible loss.

In an embodiment variant, the thermal radiation (TR) forecast engine (14) can e.g. provide safety zone parameter values capturing approach and access infrastructure by fire fighters.

According to the invention, the data acquisition unit comprises an object or structure plan generator for generating a site plan of the object or structure. The site plan is composed by predefined and adjustable digital polygons and/or rectangles and/or circles representing at least buildings and/or site units and/or tank farms of an object or structure. The predefined and adjustable digital polygons and/or rectangles and/or circles can e.g. be generatable as translucent or transparent digital objects. The plan generator can e.g. scan and import via the data interface at least plans or images of an object or structure at least comprising *.dwg and/or *bmp and/or *jpg and/or *tif and/or *.tiff and/or *.gif and/or EML5.0 files.

In an embodiment variant, the data acquisition unit can e.g. process signals received via the data interface, the signals measuring real world physical conditions, by sampling the signals and converting the resulting samples into digital numeric values which are further processes by the vapor cloud explosions (VCE) forecasting engine and/or the ruptures of high-pressure equipment (HPR) simulation engine and/or the thermal radiation (TR) forecast engine. For processing signals received via the data interface, the data acquisition unit can e.g. further comprise sensors to convert physical parameters to electrical signals and/or signal conditioning circuitry to convert sensor signals into a form convertible to digital values and/or analog-to-digital converters to convert conditioned sensor signals to digital values.

In an even further embodiment variant, the forecasting system can e.g. further comprise a simulation engine providing forecasted monetary losses caused by an explosion and forecasted associated maximum possible loss (MPL) values, where the simulation engine generates a pricing parameter value for a cover of the forecasted maximum possible loss (MPL) in case of occurrence of an explosive event.

In an embodiment variant, the forecasting process of the vapor cloud explosions (VCE) forecasting engine can e.g. be based on computational fluid dynamics (CFD). The forecasting process of the vapor cloud explosions (VCE) forecasting engine can e.g. comprise estimating the vapor cloud mass following a spill of refrigerated, high vapor pressure hydrocarbons. The refrigerated, high vapor pressure hydrocarbons can e.g. at least comprise propane and/or LNG (LNG spill).

In an embodiment variant, the forecasting system can e.g. further comprise a vessel size estimation engine generating estimated vessel size values based on unit throughputs for corresponding projects and construction risks. The vessel size estimation engine can e.g. comprise means for generating vessel volume parameter values for spherical, cylindrical vessels with different end covers.

Finally, in an embodiment variant, the high pressure vessels at least comprising metallic vessel and/or thick metallic liner hoop wrapped with a fiber - resin composite and/or metallic liner fully wrapped with fiber - resin composite and/or polymer liner fully wrapped with fiber - resin composite.

### Brief Description of the Drawings

The present invention will be explained in more detail below relying on examples and with reference to these drawings in which:
Figure 1 shows a block diagram, schematically illustrating the exemplary key steps of the workflow of the inventive system. The key steps of the workflow comprise (1) Creating a location and defining location properties (type, capacity, owner, PD + BI values etc.), (2) Defining location units and equipment (type, capacity, PD value etc.), (3) Defining loss scenario(s) (type, additional loss parameters), (4) Running one or several simulations per scenario, and (5) Visualizing and exporting results.
Figure 2 shows a diagram, schematically illustrating the exemplary creation and managing of locations over the GUI of the inventive system.
Figure 3 shows a diagram, schematically illustrating exemplary default settings, with on the left side an exemplary location description screen, and on the right side exemplary currency and physical units screen.
Figure 4 shows a diagram, schematically illustrating exemplary input values for location description.
Figure 5 shows a diagram, schematically illustrating exemplary input values for currency and physical units.
Figure 6 shows a diagram, schematically illustrating exemplary default settings, with on the left side an exemplary BI (Business Interruption) and PD (Property Damage) default settings screen, and on the right side exemplary loss factor screen.
Figure 7 shows a diagram, schematically illustrating exemplary input values for PD/BI location default settings.
Figure 8 shows a diagram, schematically illustrating exemplary input values for loss factor default settings.
Figure 9 shows a diagram, schematically illustrating exemplary location PD and BI valuation windows, with on the left side an exemplary location PD value screen, and on the right side exemplary location BI value screen.
Figure 10 shows a diagram, schematically illustrating an exemplary screen values for PD/BI location default settings.
Figure 11 shows a diagram, schematically illustrating an exemplary input screen for the location BI value.
Figures 12 and 13 show diagrams, schematically illustrating exemplary, that the points of the graph can be moved vertically to reflect an expected increase / decrease of BI sum exposed over time.
Figures 14 and 15 show diagrams, schematically illustrating an exemplary creation of footprints via geometry icons in the header ribbon, where figure 14 shows a diagram, schematically illustrating exemplary input values for unit properties. And figure 15 schematically illustrating the process of defining unit properties.
Figure 16 shows a diagram, schematically illustrating an exemplary input screen for the scenario manager.
Figure 17 shows a diagram, schematically illustrating exemplary scenario manager input screen, with on the left side an exemplary process of defining new scenarios, and on the right side exemplary screen with additional loss factors.
Figure 18 shows a diagram, schematically illustrating defining of the Bl impact. In order to use the expert mode of the BI impact, the three BI impact fields of business impact, Start Date and No. of months should be filled first. It should be added that the impact can also be varied over time by dragging the points.
Figure 19 shows a diagram, schematically illustrating exemplary utility calculator input screen, with on the left side an exemplary screen with a release rate calculator, and on the right side exemplary screen with a flash fraction calculator.
Figure 20 shows a diagram, schematically illustrating exemplary utility calculator input screen, with on the left side an exemplary screen with a LNG spill calculator, and on the right side exemplary screen with a vessel volume calculator.
Figure 21 shows a diagram, schematically illustrating an exemplary Vapour Cloud Explosion (VCE) simulation screen.
Figure 22 shows a diagram, schematically illustrating exemplary input values for a VCE simulation panel.
Figure 23 shows a diagram, schematically illustrating exemplary input screen for a HPR simulation panel.
Figure 24 shows a diagram, schematically illustrating exemplary input values for a HPR simulation panel.
Figure 25 shows a diagram, schematically illustrating another exemplary input screen for a HPR simulation panel.
Figure 26 shows a diagram, schematically illustrating exemplary input values for a thermal radiation simulation panel.
Figure 27 shows a diagram, schematically illustrating exemplary result panels, with on the left side an exemplary screen with a thermal radiation result panel, and on the right side exemplary screen with a VCE result panel.

### Detailed Description of the Preferred Embodiments

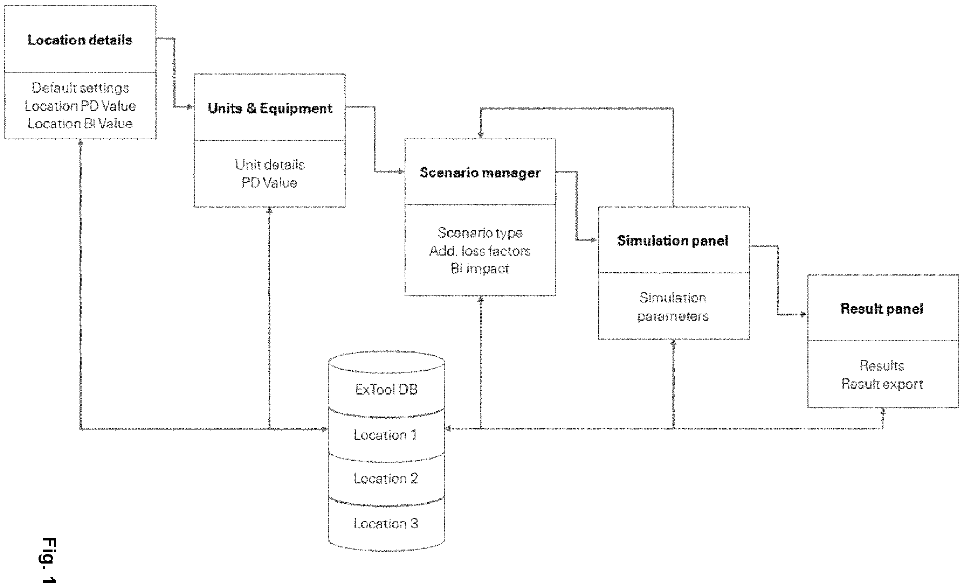

Figures 1 to 2 schematically illustrate an architecture for an automated danger and risk-measuring and prediction system providing quantified impact strength measuring parameter values for a defined future time window for petroleum and chemical industry. Fig. 1 illustrates a block diagram of the inventive automated risk valuation system and digital platform, which allows automatically estimating physical and/or financial damage of petroleum and chemical industry, such as refinery process units, complete refineries, gas plants, petrochemical plants, chemical plants, steam crackers and others in case of occurring loss events. Petrochemical industries are especially exposed to the risk of large losses by impacting loss events. Explosions are the primary cause of major incidents in the oil and petrochemical industries, where vast inventories of flammable materials and extreme process conditions lead to said high loss potential.

The automated system, being based on TNT explosion models, provides the user with transparent and easy-to-use models to assess the loss potential associated with vapor cloud explosions (VCE) and ruptures of high-pressure equipment (HPR). In the TNT explosion models, the physical parameters are derived by those of an equivalent amount of TNT, allowing to assess the peak overpressure caused by the explosion energy in a scaled distance from the explosion center. The inventive system allows to assess the physical and financial damage caused by the explosion energy. The inventive modeling structures can directly be used to measure the financial and/or physical damage (estimated overpressures resulting from a VCE or an HPR are often incorrect in prior art systems), or can be combined with a distribution of property values from the process plant in question to yield an explosion loss estimate in monetary terms. The inventive system focuses on damage to property, allowing to assess (i) assess the blast effect of a potential explosion, (ii) assess the severity of a potential tank fire, (iii) draft distribution of known monetary values on site plans, (iv) determine monetary losses caused by an explosion and extrapolate maximum possible loss (MPL) values from those figures in turn, (v) visualize results in a variety of ways, (vi) document scenarios including the addition of fire following, debris removal and cost increase during time of rebuild.

The inventive system is based on a central database handling locations and simulation data. Users have client-access to the data from their respective workstations. If a user works on a location, modifies scenarios and runs simulations, the data on the database will be modified for all other users. User access is recorded (userID, date). As embodiment variant, changes can be versioned or tracked. For example, time series of changes may e.g. allow users to jump forward and backward in time in regard to versions or other changes in the inventive system.

Further, as an embodiment variant, the inventive system can e.g. expand its modeling structure beyond VCE (Vapor Cloud Explosion), HPR (High-Pressure Equipment) and thermal radiation to include toxic release model structures. Toxic release modelling structure comprises first 3 steps in consequence to allow modeling processing: (1) The system automatically recognizes the pattern of the incident by measuring or capturing incident data to identify release incident, i.e. which process situations can lead to a release; (2) generating a source model structure to capturing and/or parameterizing how materials are released and at which rate of release; and (3) generating and forecasting the downwind concentrations (i.e. parameter values) of toxic material using the dispersion model structure. Once the downwind concentrations are generated and/or predicted, several criteria can e.g. be available to forecast impact at the effect. Two ways the release of toxic materials can be carried away by the wind - characteristic plume or a puff. Captured measuring parameters affecting atmospheric dispersion of toxic materials can e.g. comprise (i) wind speed: As the wind speed increases, the plume becomes longer and narrower; (ii) atmospheric stability: During the day the air temperature decreases rapidly with the height. At night the air temperature decrease is less. The system can e.g. comprise a classifier providing0 automated classification by pattern recognition of the measuring parameter inputs to e.g. three stability classes: unstable, neutral, stable: (a) Unstable - the sun heats the ground faster than the heat can be removed so that the air temperature near the ground is higher than the temperature at higher elevation; (b) Neutral - the air above the ground warms and the wind speed increases; (c) Stable - the sun cannot heat the ground as fast as the ground cools; the air of higher density is below air of lower density; (3) ground conditions (buildings, water, trees): (i) Affect the mechanical mixing at the surface and the wind profile with height. (ii) Trees and buildings increase mixing; (4) height of release above ground level: As the release height increases, the ground level concentrations are reduced; (4) momentum and buoyancy of initial material released: (i) Change the effective height of the release. (ii) The momentum of a high-velocity jet will carry the gas higher than the point of release, resulting much higher effective release height. For example, neutrally buoyant dispersion modelling structures can be used to generate and/or forecast the concentrations downwind of a release in which the gas is mixed with fresh air to the point that the resulting mixture is neutrally buoyant, based on the measured and captured measuring and/or sensory parameter values. These modelling structures apply to gases at low concentrations, typically in ppm range. The two types model structures in the present case can e.g. be plume and puff. In another embodiment variant, also Pasquill-Gifford Model modelling structures can e.g. be applied to forecast and/or generate the above discussed parameter values. For the Pasquill-Gifford Model modelling structures, it is to be noted, that, in general, the eddy diffusivity parameter value changes with position, time, wind velocity, and prevailing weather conditions. Although the eddy diffusivity approach is useful theoretically, it is not convenient for the technical realization of the present forecast system and does not provide a useful technical framework for correlation. This technical problem can e.g. use for the dispersion coefficients a generation function based on the measured atmospheric conditions and the distance downwind from the release. The atmospheric conditions can e.g. be classified by the system according to different stability classes, where the stability classes depend on wind speed and quantity of sunlight. During the day, increased wind speed results in greater atmospheric stability, whereas at night the reverse is true. This is due to a change in vertical temperature profiles from day to night. It is further to be noted, that applying Pasquill-Gifford model structures or Gaussian dispersion modelling structures may result in the following technical limitations: (i) Applies only to neutrally buoyant dispersion of gases in which the turbulent mixing is the dominant feature of the dispersion. (ii) Typically valid for a distance of 0.1-10 km from the release point. (iii) The predicted concentrations are time average. (iv) The models presented here assumed 10-minute time average. This has to be considered, when realizing the present technical forecast and/or measuring system. Regarding the measuring of the toxic effect and its criteria, the following has to be noted: (i) What concentration is considered dangerous?, (ii) TLV-TWA is for worker exposures, and not design for short-term exposures under emergency conditions. (iii) One of the recommended method by Environmental Protection Agency (EPA) is by using emergency response planning guidelines (ERPGs) for air contaminants issued by the American Industrial Hygiene Association (AIHA), (iv) Three concentration ranges can e.g. be provided as a consequence of exposure to a specific substance: (i) ERPG-1 is the maximum airborne concentration below which it is believed nearly all individuals could be exposed for up to 1h without experiencing effects other than mild transient adverse health effects or perceiving a clearly defined objectionable odor. (ii) ERPG-2 is the maximum airborne concentration below which it is believed nearly all individuals could be exposed for up to 1h without experiencing or developing irreversible or other serious health effects or symptoms that could impair their abilities to take protective action. (iii) ERPG-3 is the maximum airborne concentration below which it is believed nearly all individuals could be exposed for up to 1h without experiencing or developing life-threatening health effects.

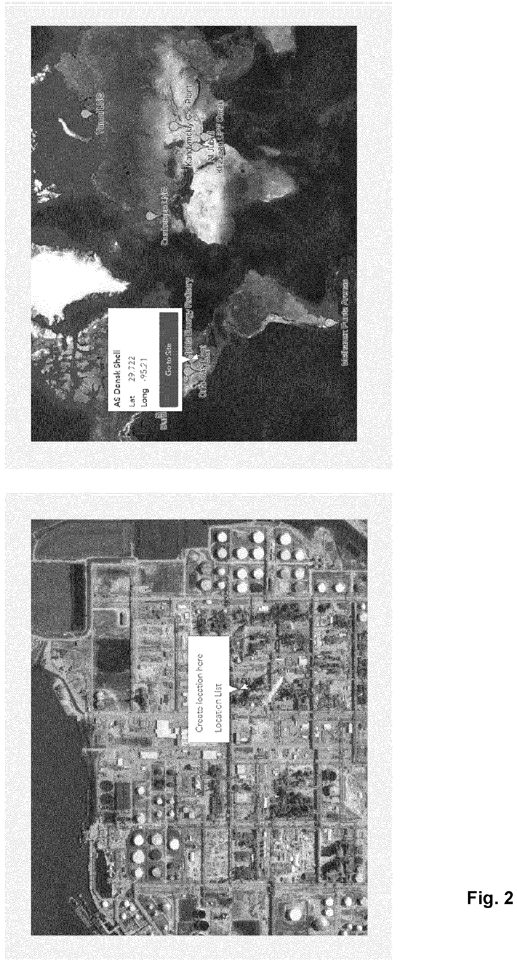

The figure 1 shows the key steps of the workflow of the inventive system, while figure 2 shows the creation and managing of locations over the GUI of the inventive system. Further, the inventive system can e.g. also comprise additional modules such as a value tracking functionality for property and BI values, a global location database, which solves the problem of tracking values through time, as well as a novel and inventive fire radiation model.

The inventive system's architecture (see figure 1) is based on a central database handling all location and simulation data. All users access the same data from their respective workstations. If a user works on a location, modifies scenarios and runs simulations, the data on the database will be modified for all other users. User access is recorded (userID, date), but the changes are not versioned or tracked.

The system is developed around the core loss estimation work flow, involving the following key steps (see fig. 1):
1. Creating a location and defining location properties (type, capacity, owner, PD + Bl values)
2. Defining location units and equipment (type, capacity, PD value etc.)
3. Value benchmarking
4. Defining loss scenario(s) (type, additional loss parameters)
5. Running one or several simulations per scenario
6. Visualizing and exporting results

A key purpose of estimating loss amounts is the determination of economic exposure to the client and the insurers. In loss estimation, the focus often lies on the potential scenario and consequences as seen from an engineering perspective. Industry loss experience however shows that the adequacy of the monetary values is often a (the) key factor that leads to inadequate loss estimates and to strongly underestimated damage amounts. While business interruption values (BI values) involve forward-looking statements about market developments and company profits, making them inherently difficult to estimate, property values often suffer from an inadequate adjustment over time, failing to adequately take into account construction price changes or exchange rate fluctuations. All too often, a good engineering loss estimate is compromised by inadequate valuation. The present inventive system allows to tackle this issue by providing value recording and comparison functionality.

In the inventive system, values can be characterized by various data points:
- The value itself in any currency
- The value source and source type: where the values originate from (e.g. the submission of client X for 2020, or a valuation study for location Z.)
- The value date: when the value was derived (e.g. property values dated 1.1.2018 - not the date when it was reported).
- The value basis: the value it represents (e.g. historic construction cost, actual cash value, book value, or replacement value for PD values; sales, gross profit, or fixed cost only for BI values)

Many insurance contracts are formulated on a basis of replacement cost for property values, and gross profit for business interruption values, though other basis may be found depending on industry or region. However, all too often (and with no bad intentions), the values used for the loss estimation do not align with the value basis of the contract, or the values are simply outdated, e.g. representing historic construction cost rather than present day replacement cost.
- The inventive system, permits to capture values for PD and BI to
- Enable tracking of values for locations, units or equipment over time
- Facilitate the build-up of a valuation database
- Empower fast comparison of values of equipment, units and locations across regions or industries, and independent of currency.

These functionalities enable an in-depth analysis of the values with a focus on judging value adequacy.

Any values stored in the system's database (DB) can e.g. be stored in units of a reference currency or an electronic equivalent measure. Whenever values at location, unit or equipment level are saved, exchange rates are called from the embedded currency exchange rate API, and saved together with the input currency, currency unit, and a timestamp. Exchange rates are therefore handled coherently, and history PD/BI values can later be viewed and compared at either historic or current exchange rates. Note that the above two listings are just exemplary and not exhaustive where additional data points and entries are easily to be integrated.

### (i) Creating, managing, and deleting locations

For creating, managing and deleting locations in the system, the system e.g. makes use of pre-population of fields. It is strongly suggested to complete the location default settings, the information of which will be used in numerous fields throughout the workflow.

For the creation of a location, the system can e.g. provide global satellite imagery. Details of the imagery (date of recording) are available ..... Locations can e.g. be created with global coordinates which can be used as basis for all calculations.

If no imagery of the site is available, the system can e.g. allow to import images. Georeferenced image files (kml and world files) can e.g. be read directly. If no georeferenced files are available, the user can e.g. import images to use it as a basis for any further modelling and calculations. This can e.g. be done with the following steps:
- Open the layer menu
- Select the desired file
- In the import window, the scale of the image can e.g. be set (by drawing a line and defining its length) and the North arrow. Click OK
- The image is imported in the center of the window.
- Right-click the image, and select 'Edit' can e.g. now translate, rote, stretch and scale the image. When done, a click outside the image can be used to exit the edit mode.

The inventive system can e.g. contain a large database of library locations ( ). To perform loss estimates, an assessment location ( ) must be created from a library location as follows: > Create location here < . An existing location can be accessed via < Go to Site < . When a location is created, the location default settings are automatically opened (see fig. 2). Figure 2 illustrates creating and accessing sites, where the left side of the picture shows an exemplary creation of a location e.g. by a right click, and the right side of the picture an exemplary open of a location e.g. by a left click.

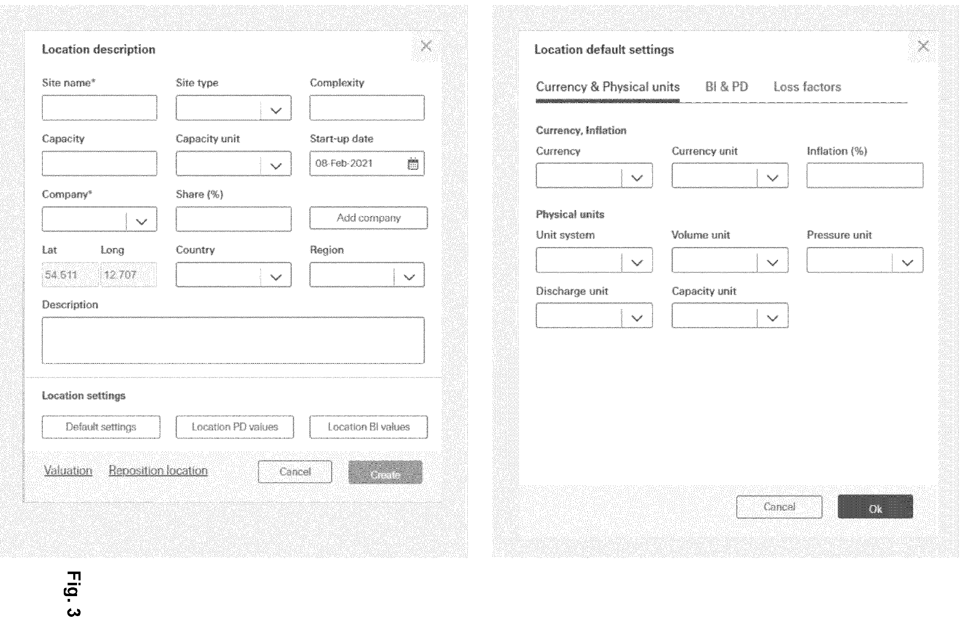

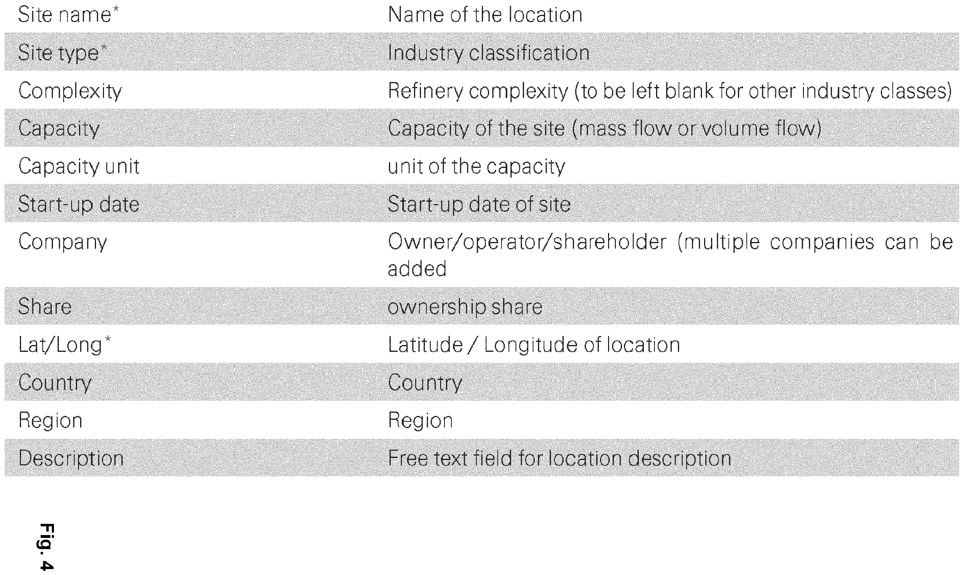

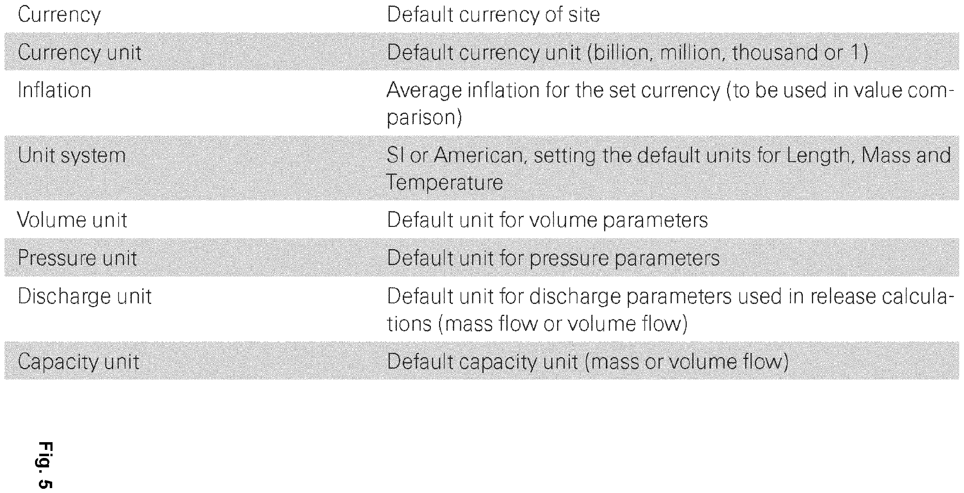

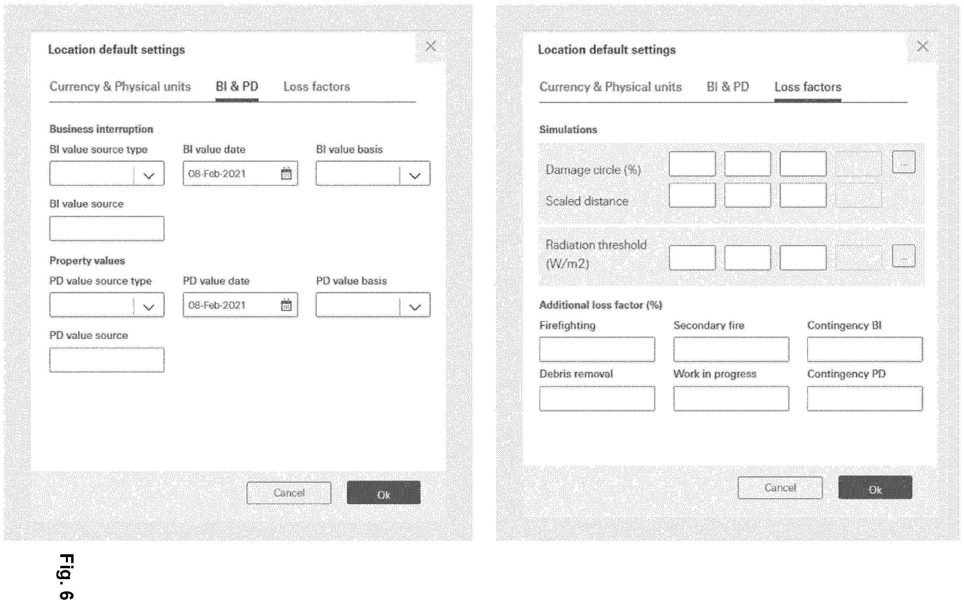

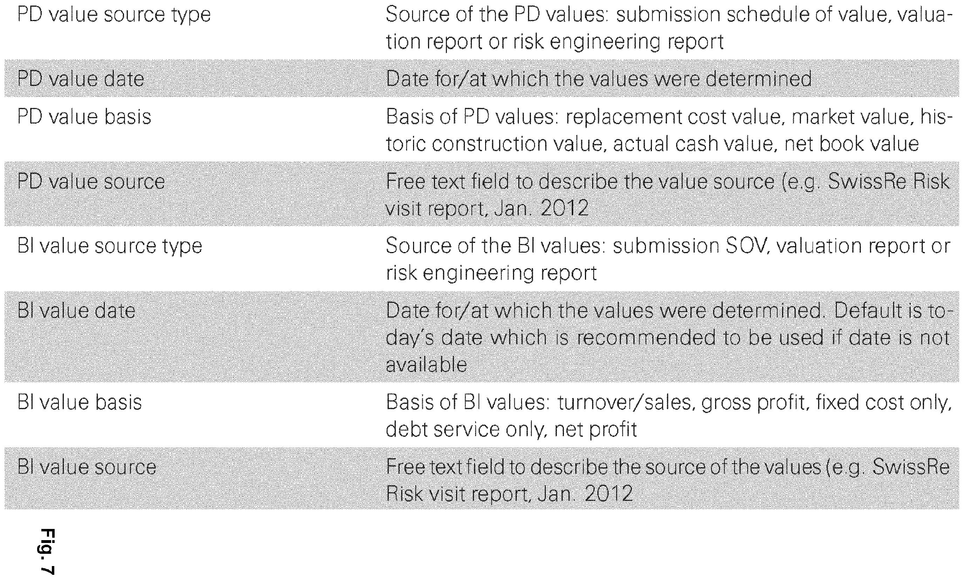

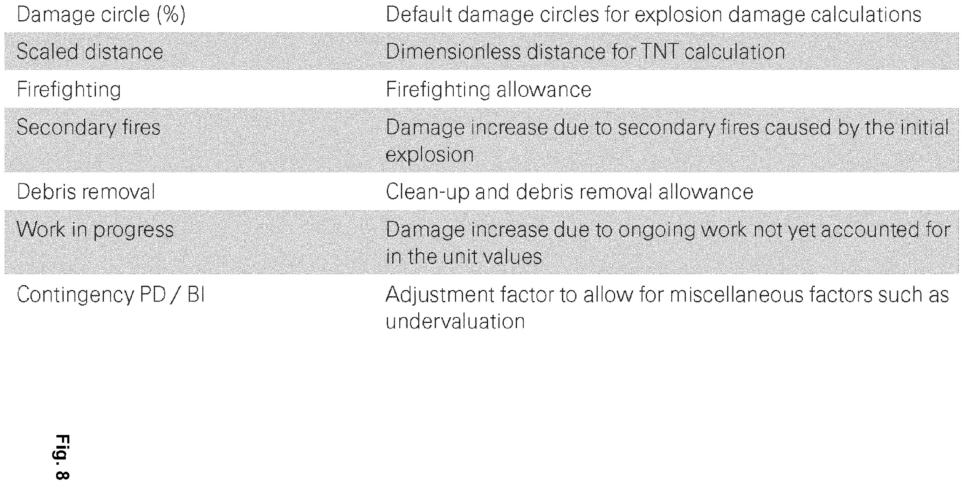

Location default settings can e.g. be used to pre-populate data fields for units and simulations of a location. It can be preferrable to complete the default settings section with as much information as possible. This information is used to pre-populate a large number of fields further down-stream in the modelling process, and supports the build-up of a complete and high-quality dataset. Figure 3 shows a diagram, schematically illustrating exemplary default settings, with on the left side an exemplary location description screen, and on the right side exemplary currency and physical units. Figure 4 shows a diagram, schematically illustrating an exemplary location description. Figure 5 shows a diagram, schematically illustrating exemplary input values for currency and physical units. Figure 6 shows a diagram, schematically illustrating exemplary default settings, with on the left side an exemplary BI and PD default settings screen, and on the right side exemplary loss factor screen. Figure 7 shows a diagram, schematically illustrating exemplary input values for PD/BI location default settings. Figure 8 shows a diagram, schematically illustrating exemplary input values for loss factor default settings.

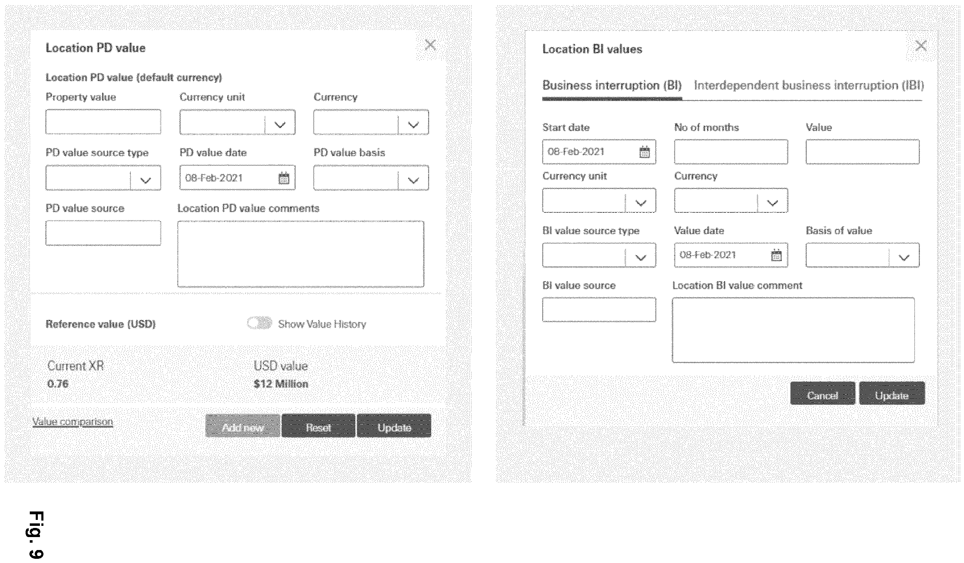

For the location values, location PD and BI values can be set as shown in fig. 9. Several input fields can be prepopulated with values from the Location Default Setting window if empty:
- Currency unit
- Currency
- PD/BI value source type
- PD/BI value source
- PD/BI value date
- PD/BI value basis

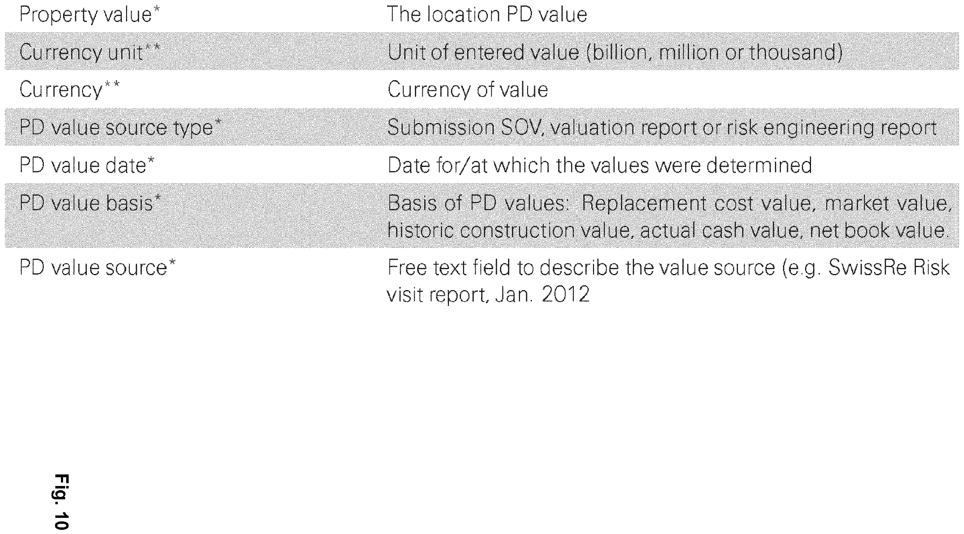

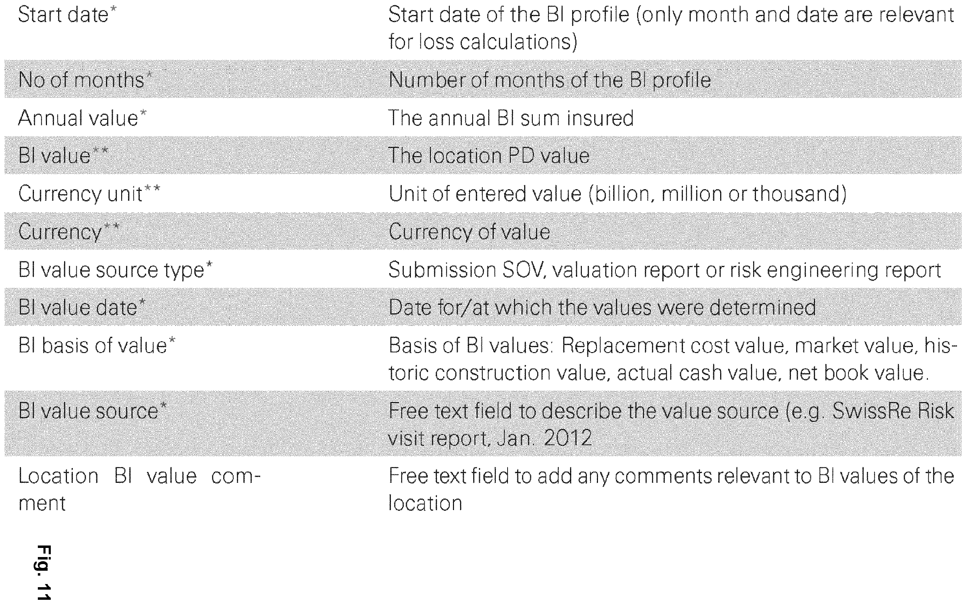

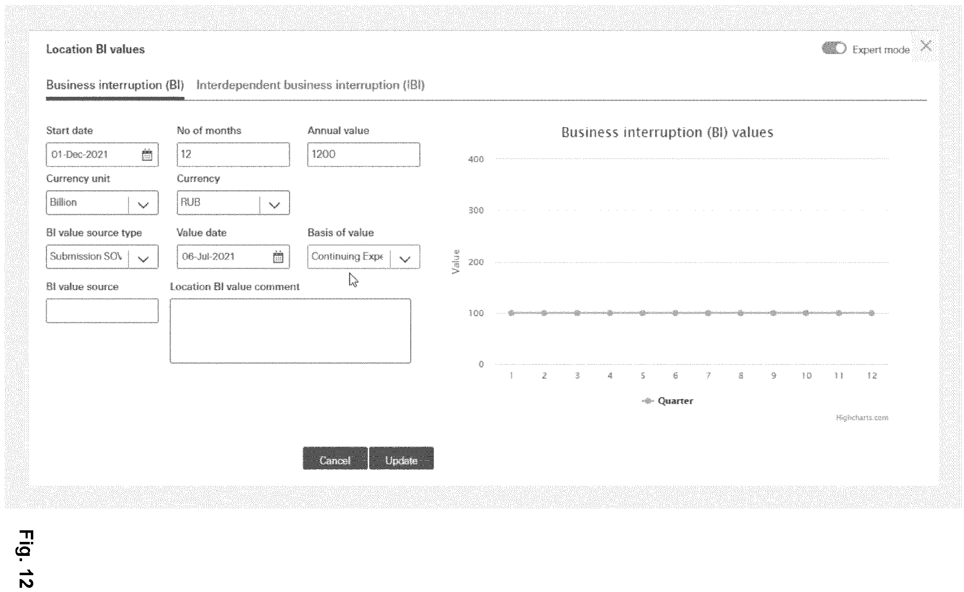

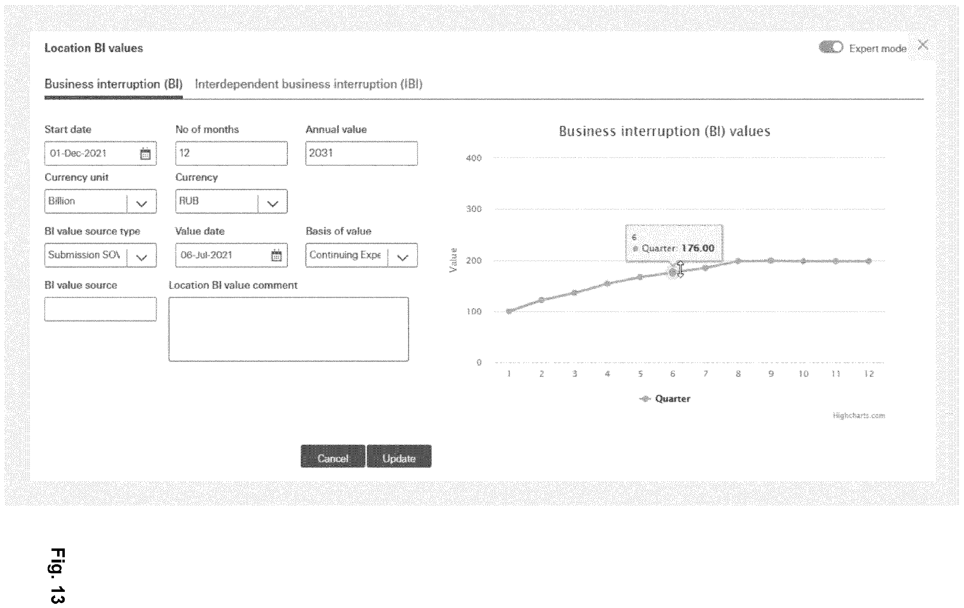

If default values are used to populate the input fields, they can nevertheless be overwritten, and the user input will be stored in the database. Figure 9 shows a diagram, schematically illustrating exemplary location PD and BI valuation windows, with on the left side an exemplary location PD value screen, and on the right side exemplary location Bl value screen. Figure 10 shows a diagram, schematically illustrating an exemplary screen values for PD/BI location default settings. Figure 11 shows a diagram, schematically illustrating an exemplary input screen for the location BI value. Figures 12 and 13 show diagrams, schematically illustrating exemplary, that the points of the graph can be moved vertically to reflect an expected increase / decrease of BI sum exposed over time, where fig. 12 shows an exemplary expert BI value window, and fig. 13 an exemplary modifying of the BI profile.

### (ii) Managing units, equipment and features

The inventive system allows to categorize / assign basic properties to plant parts, units and equipment.

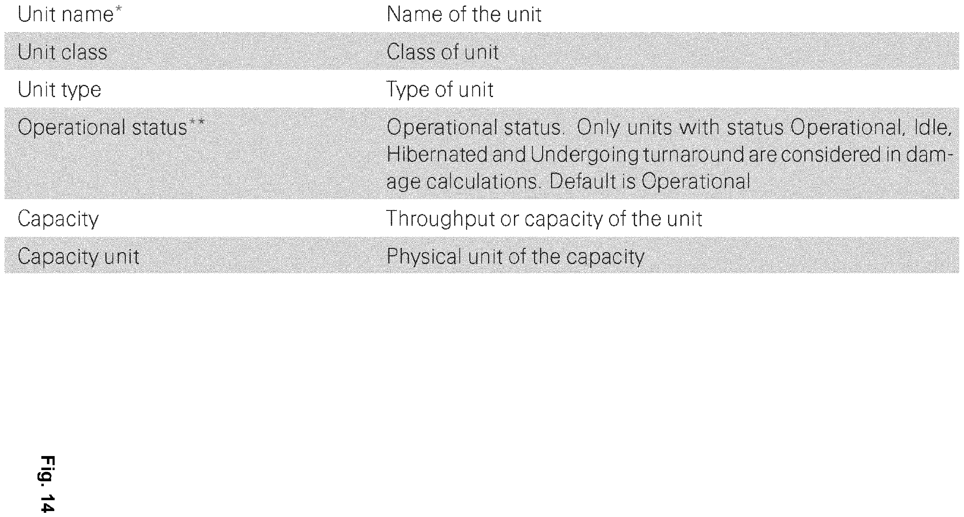

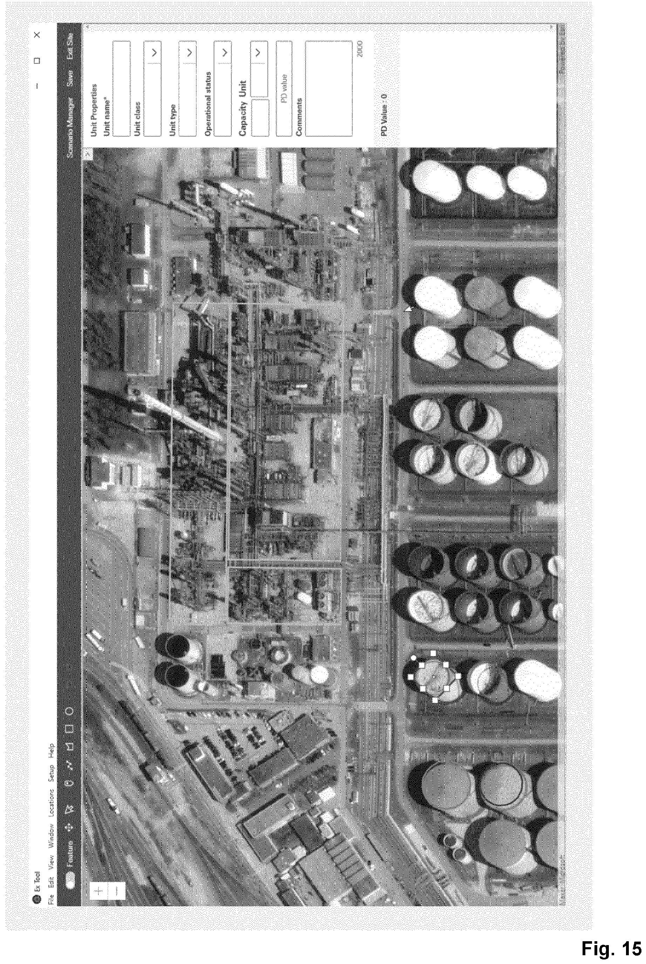

For creating and deleting units, any unit, equipment, plant section or feature in the system has a footprint, which preferable is created before additional data is entered. Footprints can e.g. be created via geometry icons in the header ribbon, as illustrated by figure 14 and 15.

As an embodiment variant, the unit color can e.g. indicate the data status of the unit/equipment, as:
- selected unit
- unit is not saved
- unit is saved and has at least a unit name
- unit has value attached

### (iii) Running scenarios and simulations

A scenario describes what can go wrong in a processing facility. Examples of scenarios are the formation of a VCE from an overhead condenser, a tank fire on a crude oil tank, or a high pressure rupture on a chemical reactor. Simulations calculate damage degrees for a specific scenario with varying input parameters (e.g. different mass in cloud, varying yield factors, or a change in free volume).

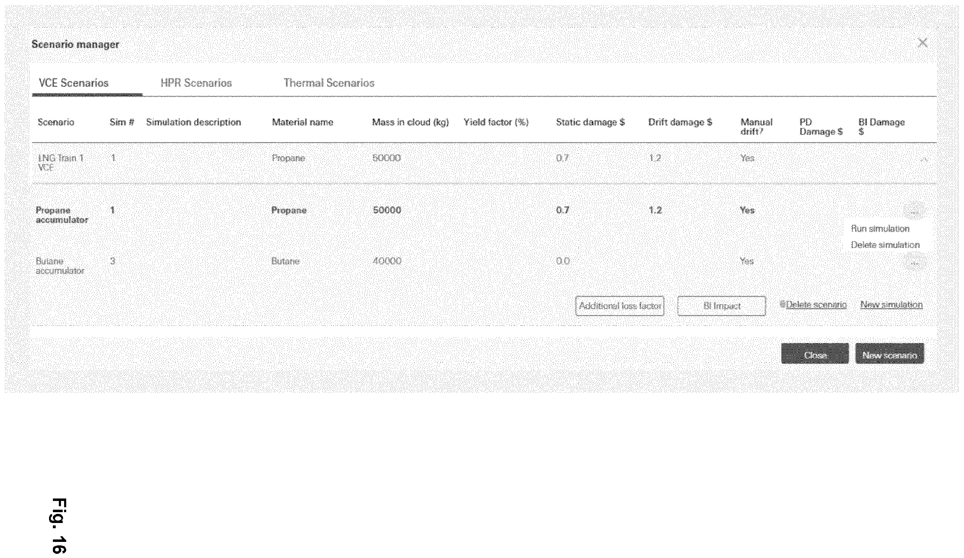

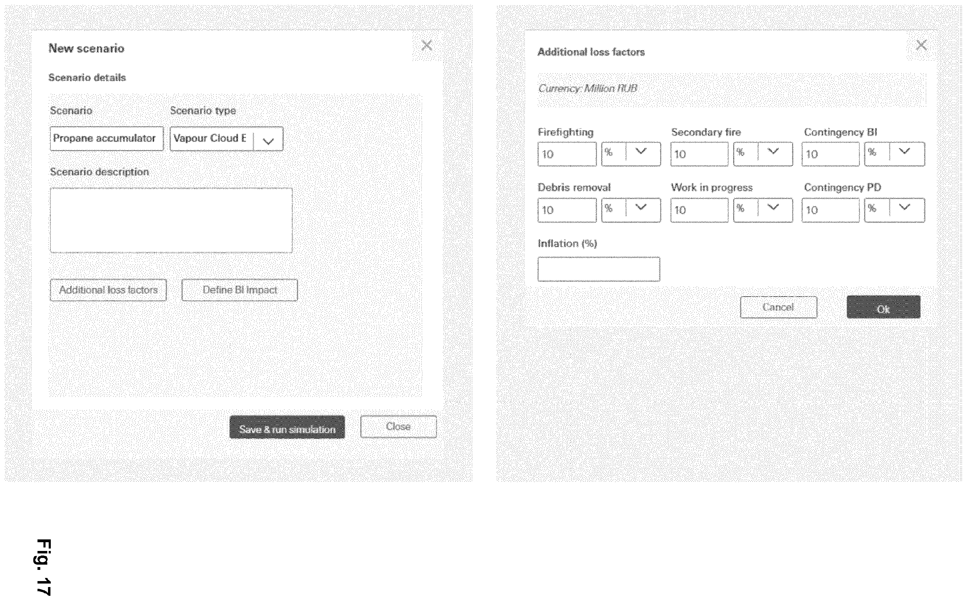

For any location, multiple scenarios can be run to assess damage potential e.g. by a scenario manager module of the system, as illustrated by figures 16 and 17. In order to evaluate the effect of input parameter variation, multiple simulations can be established per scenario. One of these simulations will be designated by the user as preferred simulation, which determines the loss amount assigned to that particular scenario. The scenario manager allows to create new scenarios, review, rerun and edit existing simulations, or delete simulations and scenarios. A scenario can only be deleted if all simulations belonging to that scenario have been deleted. Scenarios can be entered via ... < run simulation < .

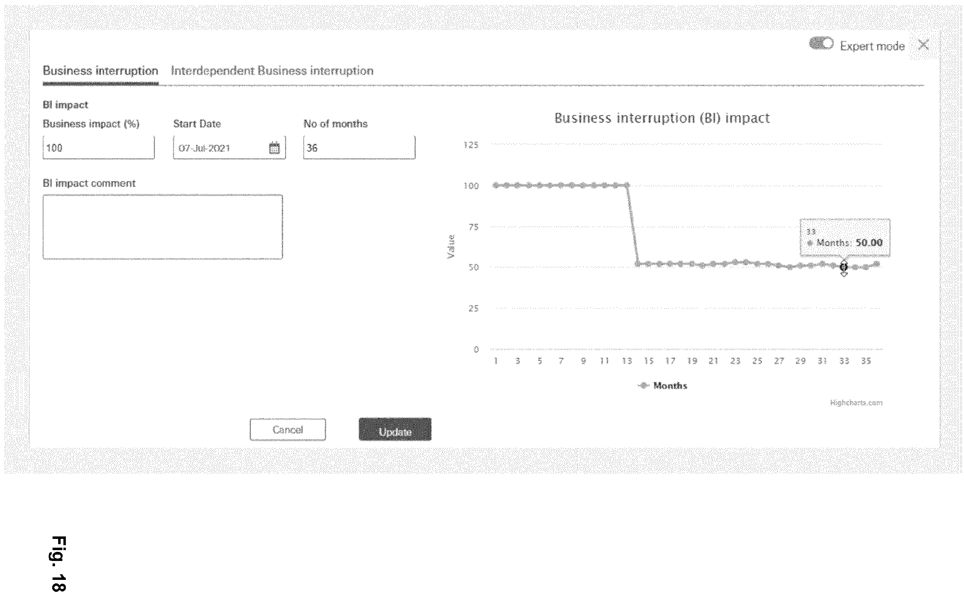

Scenarios can be created via the New Scenario window (Fig. 17 left side) from the scenario manager ( New Scenario ). Additional loss factors can be defined (Fig. 17 right side, in % of value, or as limits in the default currency). The BI impact allows to define an estimated impact on the BI value profile as defined in the location description. In order to use the expert mode of the BI impact, the three BI impact fields of Business impact, Start Date and No. of months should be filled first (Fig. 18). BI value profile and BI impact profiles can e.g. be combined month-wise to determine the BI impact of the scenario. If either the BI value or BI impact are undefined for a certain month, the loss contribution to the total loss will be zero.

A utility calculator can e.g. be comprised in the system for the calculation of:
- Release rate
- Flash fraction calculation
- Vessel volume
- LNG spill / evaporation
- The calculator can be accessed from the VCE and HPR simulation panel via the link open calculations.

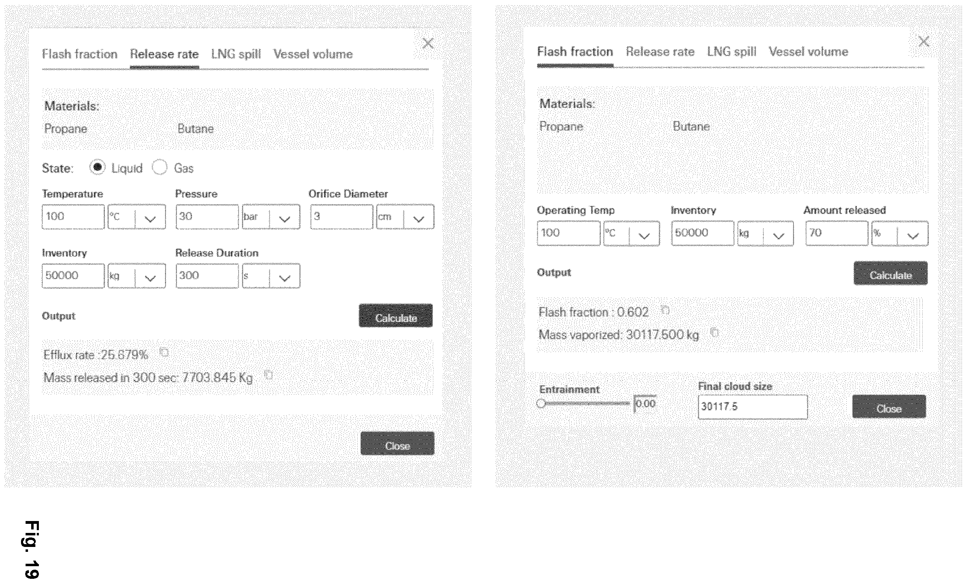

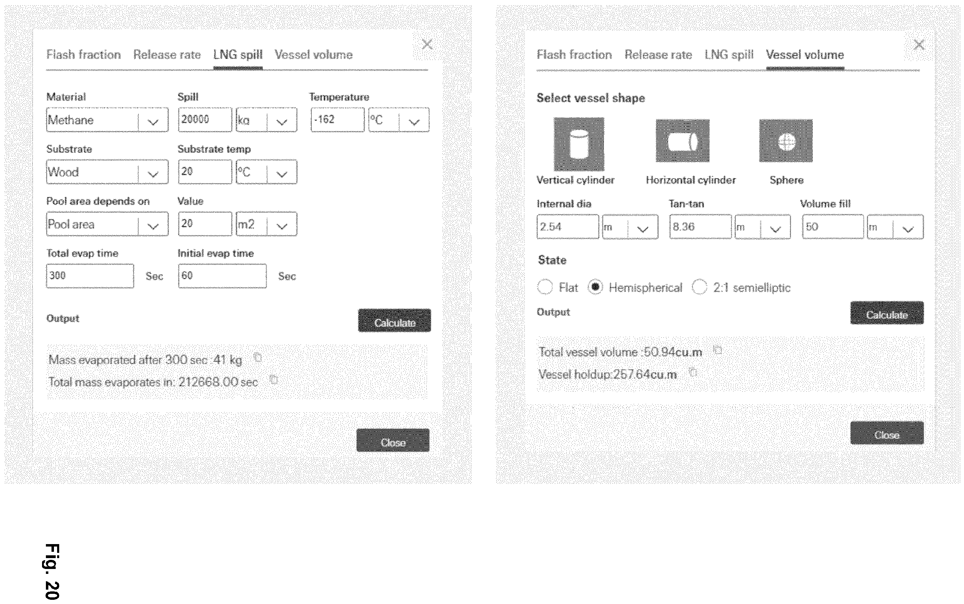

Figure 19 shows a diagram, schematically illustrating exemplary utility calculator input screen, with on the left side an exemplary screen with a release rate calculator, and on the right side exemplary screen with a flash fraction calculator. Figure 20 shows a diagram, schematically illustrating exemplary utility calculator input screen, with on the left side an exemplary screen with a LNG spill calculator, and on the right side exemplary screen with a vessel volume calculator.

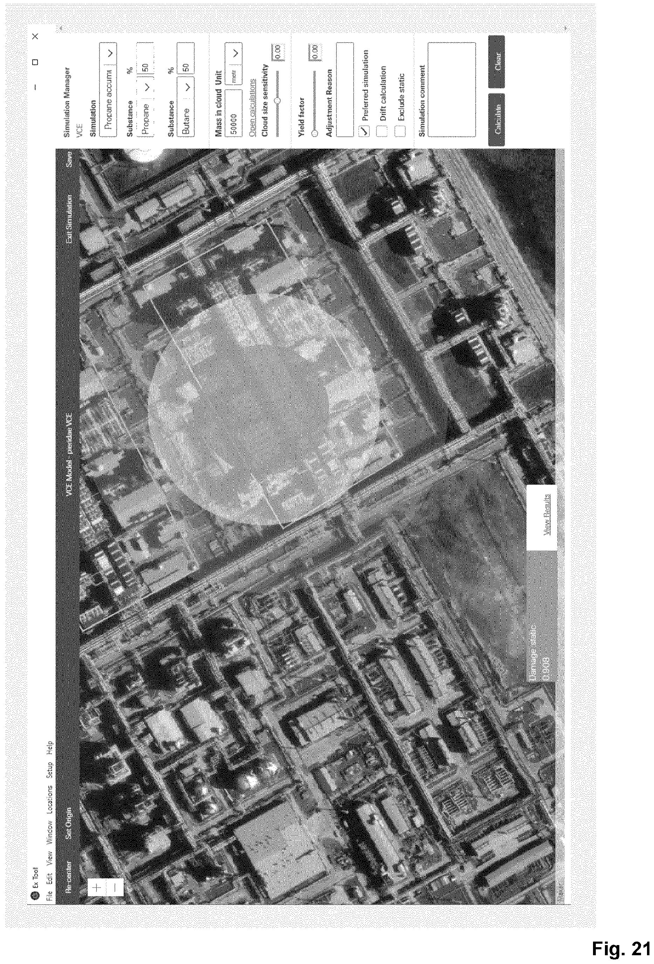

In order to run Vapour Cloud Explosion (VCE) simulations, the origin should first be set via Set Origin. The origin can be reset in the same manner (it is recommended to create different scenarios for different vessels that may constitute the source of vapour clouds). The inventive system can e.g. use a TNT equivalent model, the background of which is outlined below. In mixtures, the yield factor can e.g. be set to the highest value of the materials in the mixture. The user can preferably adjust this value if the highest value is given by a substance with a comparatively low mass fraction in the mixture. Figure 21 shows a diagram, schematically illustrating an exemplary Vapour Cloud Explosion (VCE) simulation screen.

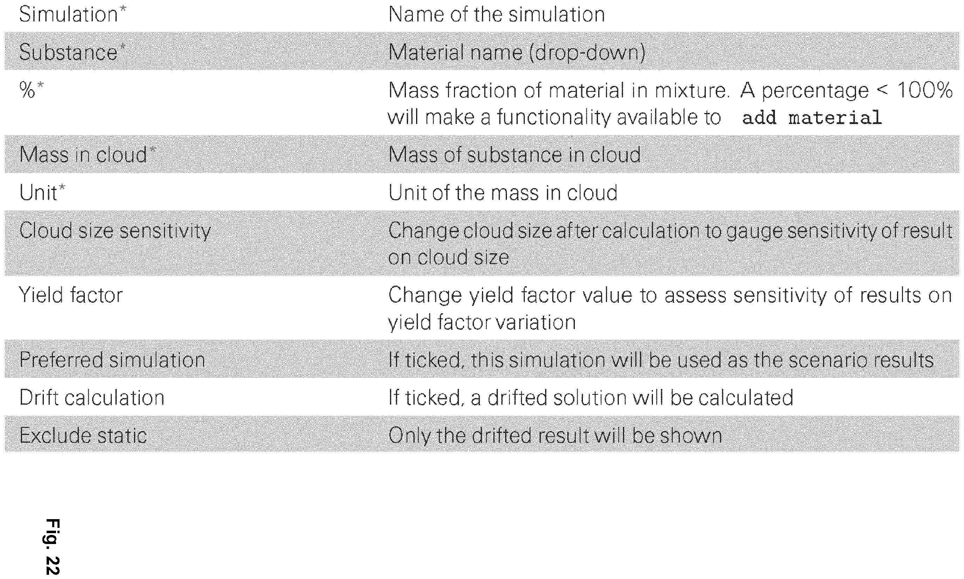

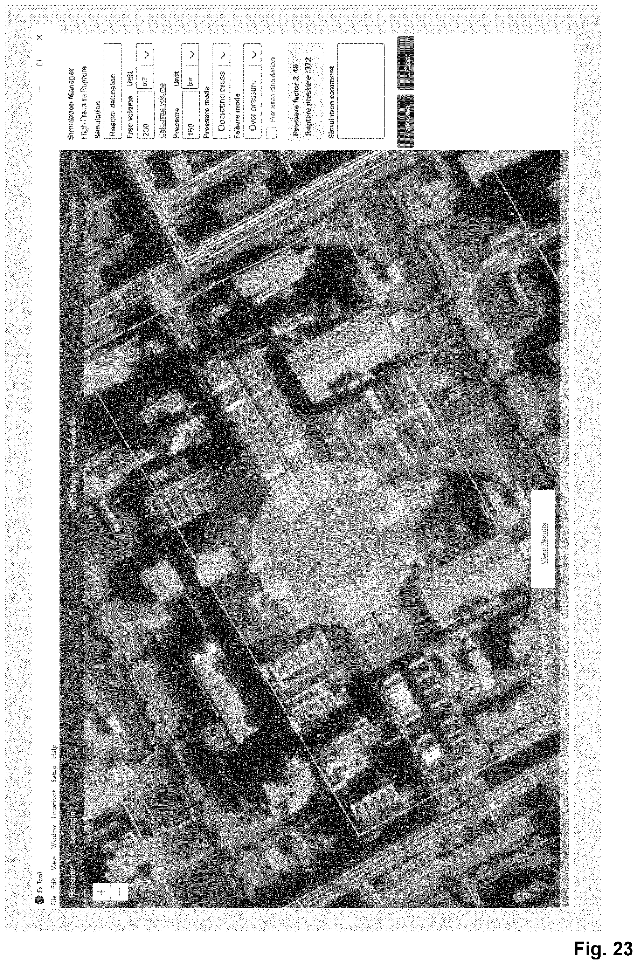

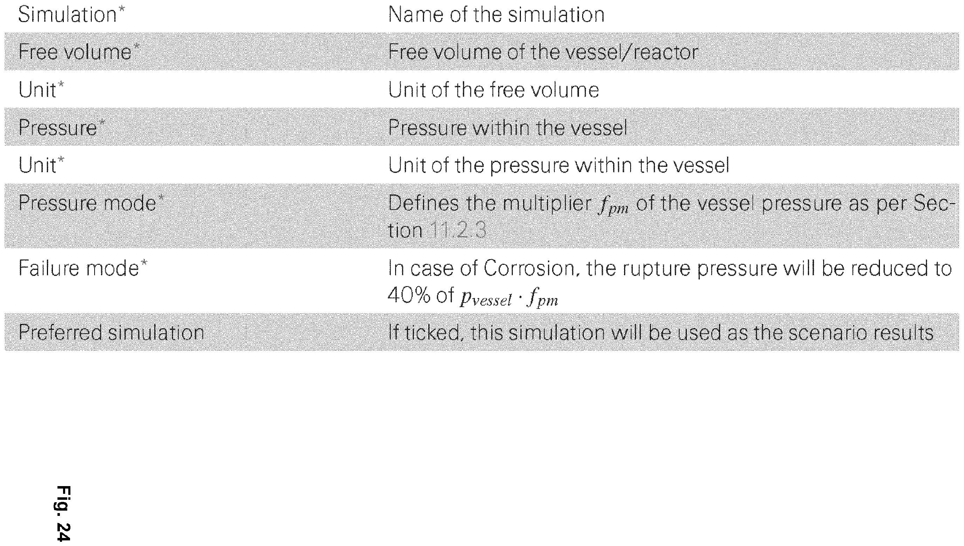

High pressure rupture simulations are used to simulate the effects of vessel explosions. The simulations use a TNT equivalent methodology akin to the VCE model. Details of the model are given below. Figure 22 shows a diagram, schematically illustrating exemplary input values for a VCE simulation panel. Figure 23 shows a diagram, schematically illustrating exemplary input screen for a HPR simulation panel. Figure 24 shows a diagram, schematically illustrating exemplary input values for a HPR simulation panel.

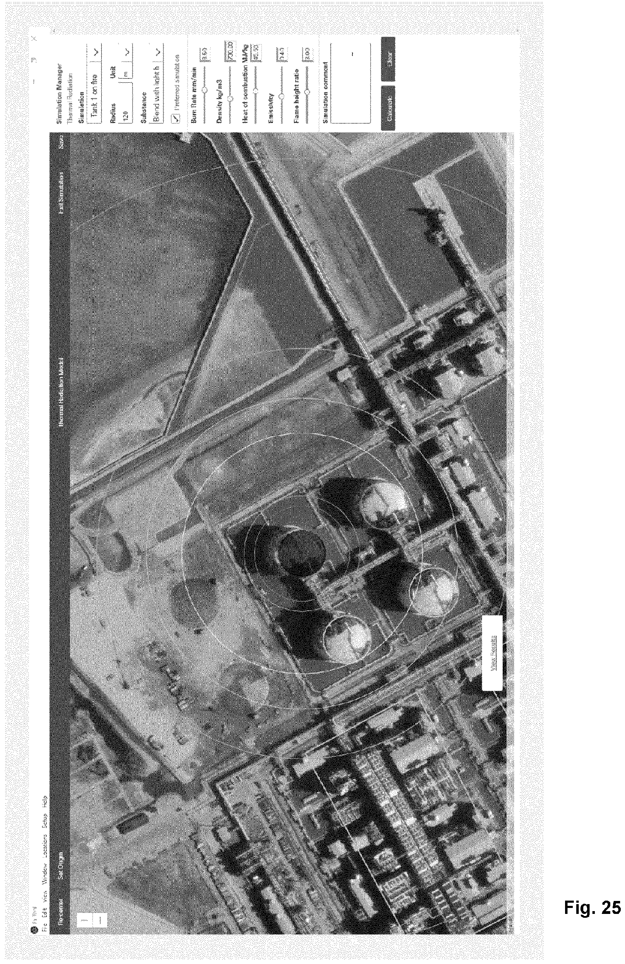

For running Thermal Radiation (TR) simulations, the inventive step can e.g. comprise implemented thermal radiation modelling allowing to estimate radiation levels caused by a hydrocarbon surface fire. A circular burning surface is assumed and must be set prior to running a simulation via Set Origin . The radiation model follows the theory as outlined below. The radiation thresholds (colored circles) indicate the maximum exposure levels for fire propagation and human firefighting exposure limits. In order to assess the sensitivity of the results, or to model materials other than the provided library materials, the input can be varied using the sliders for the five variables. Figure 25 shows a diagram, schematically illustrating another exemplary input screen for a HPR simulation panel. Figure 26 shows a diagram, schematically illustrating exemplary input values for a thermal radiation simulation panel.

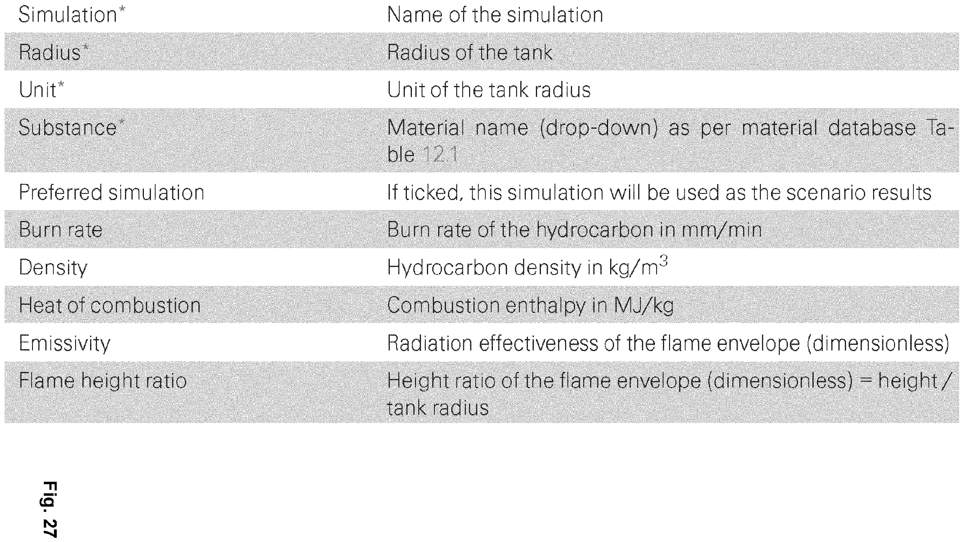

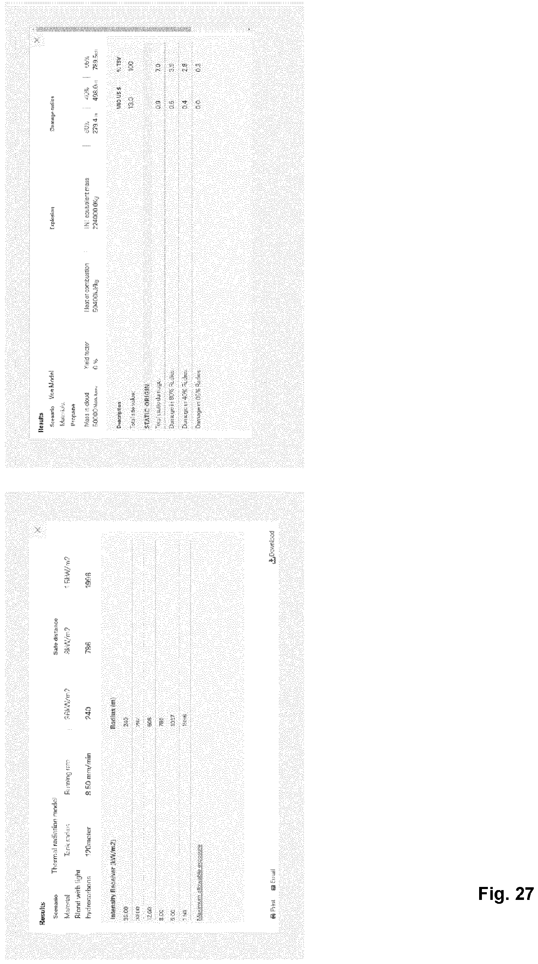

For visualizing and exporting results, the results of a simulation can e.g. be displayed in the result panel at the bottom of the window. Additional loss factors are taken as defined at scenario level (hence they are equal for all simulations within a given scenario). Results can e.g. be exported in xyz format. Figure 27 shows a diagram, schematically illustrating exemplary result panels, with on the left side an exemplary screen with a thermal radiation result panel, and on the right side exemplary screen with a VCE result panel.

### List of References

1 Automated maximum impact measurand forecasting system
   11 Data acquisition unit
      111 Data interface
      112 Object or structure plan generator
         1121 Site plan
         11211 Digital shapes
            112111 Polygon
            112122 Rectangles
            112133 Circles
         11212 Digital layout / digital representation
   12 Vapor cloud explosions (VCE) forecasting engine
      121 Material database
   13 Ruptures of high-pressure equipment (HPR) simulation engine
   14 Thermal radiation (TR) forecast engine
      141 TR simulation unit
      142 UI adjustment module
   15 Simulation engine
2 Impacting object / structure / site
   21 Resistance parameters
      211 Material
         2111 Open steel
         2112 Concrete
         2113 Reinforced concrete
         2114 Wood type
         2115 Brick type
         2116 Stone type
      212 Material strength
      213 Material density / material composition
      214 Steel fiber content of concrete
      215 Bar diameter
      216 Mesh size / bar distance
      217 Concrete/steel cover
   22 Object/structure location parameters
   23 Approach and access infrastructure
      231 Safety zone parameter
3 Explosive
   31 Loading parameters
      311 Amount of explosive
      312 TNT equivalent
      313 Diameter
      314 Height ratio
      315 Ignition point position
      316 Geomaterial as casing
      316 Geomaterial as cover of plate
   32 Explosive location parameters
4 Data transmission network
5 Measuring and sensory devices
6 External databases
   61 Object/structure characteristics parameter
   62 Explosive characteristics
7 Data input devices

## Claims

1. An automated maximum impact measurand forecasting system for measuring an impact of an explosion of an explosive in open steel and/or concrete and/or reinforced concrete structures, wherein at least loading and/or resistance measuring parameter values are measured and/or captured by the automated forecasting system, wherein the loading parameters characterizing the explosive at least comprise amount of explosive and/or TNT equivalent of explosive and/or diameter and/or height ratio and/or ignition point position and/or geomaterial as casing and/or geomaterial as cover of plate, and wherein the resistance parameters characterizing the object or structure at least comprise material and/or material strength and/or material density and/or material composition and/or steel fiber content of concrete and/or bar diameter and/or mesh size and/or bar distance and/or concrete/steel cover, wherein
the automated system comprises a data acquisition unit capturing loading and resistance parameter from measuring and sensory devices and/or internal or external databases, the loading and resistance parameters at least comprising object/structure location parameters and explosive location parameters and/or maps/geometry parameters and/or amount of explosive and/or TNT equivalent of explosive,
wherein the data acquisition unit comprises an object or structure plan generator for generating a site plan of the object or structure, the site plan being composed by predefined and adjustable digital shapes representing at least buildings and/or site units and/or tank farms of an object or structure, wherein the adjustable digital shapes at least comprise digital polygons and/or rectangles and/or circles representing at least buildings and/or site units and/or tank farms of an object or structure,
wherein the automated system comprises a vapor cloud explosions (VCE) forecasting engine comprising a material database at least comprising properties parameters of explosives possibly involved in explosions and tank fires, forecasting values for the drift of vapor cloud explosions based on geometrical details of obstacles likely to be encountered by the vapor cloud and forecasted turbulence parameters associated with the obstacles,
wherein the automated system comprises a ruptures of high-pressure equipment (HPR) simulation engine, the ruptures at least relating to ruptures associated with high pressure vessels at least based on the materials and/or topology and/or process techniques and/or composite lay-up and/or winding angles of the high-pressure vessels,
**characterized in that** the automated system comprises a thermal radiation (TR) forecast engine, wherein, for the modelling process of the thermal radiation, the thermal radiation (TR) forecast engine generates lines of constant heat radiation intensities allowing for the assessment of fire propagation and/or radiation intensity, wherein the lines of constant heat radiation intensities are generated concentric circles of constant heat radiation intensities and
**in that** quantified impact strength measuring parameter values for a defined future time window is provided by the system at least assessing (i) blast effect of a potential explosion by the vapor cloud explosions (VCE) forecasting engine and/or ruptures of high-pressure equipment (HPR) simulation engine and/or (ii) severity of a potential tank fire by the thermal radiation (TR) forecast engine, wherein impact strength is measured scenario-specific by varying captured parameters.

2. An automated maximum impact measurand forecasting system according to claim 1, **characterized in that** the material parameters at least comprise open steel and/or concrete and/or reinforced concrete and/or wood type and/or brick type and/or stone type.

3. An automated maximum impact measurand forecasting system according to one of the claims 1 or 2, **characterized in that** the thermal radiation (TR) forecast engine provides safety zone parameter values capturing approach and access infrastructure by fire fighters.

4. An automated maximum impact measurand forecasting system according to one of the claims 1 to 3, **characterized in that** the predefined and adjustable digital shapes are generatable as translucent or transparent digital objects.

5. An automated maximum impact measurand forecasting system according to one of the claims 1 to 4, **characterized in that** the plan generator scans and imports via the data interface at least plans or images of an object or structure at least comprising *.dwg and/or *bmp and/or *jpg and/or *tif and/or *.tiff and/or *.gif and/or .kml and/or EML5.0 files.

6. An automated maximum impact measurand forecasting system according to one of the claims 1 to 5, **characterized in that** the data acquisition unit processes signals received via the data interface, the signals measuring real world physical conditions, by sampling the signals and converting the resulting samples into digital numeric values which are further processes by the vapor cloud explosions (VCE) forecasting engine and/or the ruptures of high-pressure equipment (HPR) simulation engine and/or the thermal radiation (TR) forecast engine.

7. An automated maximum impact measurand forecasting system according to claim 6, **characterized in that**, for processing signals received via the data interface, the data acquisition unit further comprises sensors to convert physical parameters to electrical signals and/or signal conditioning circuitry to convert sensor signals into a form convertible to digital values and/or analog-to-digital converters to convert conditioned sensor signals to digital values.

8. An automated maximum impact measurand forecasting system according to one of the claims 1 to 7, **characterized in that** the forecasting system further comprises a simulation engine providing forecasted monetary losses caused by an explosion and forecasted associated maximum possible loss (MPL) values, where the simulation engine generates a cost parameter value for a cover of the forecasted maximum possible loss (MPL) in case of occurrence of an explosive event.

9. An automated maximum impact measurand forecasting system according to one of the claims 1 to 8, **characterized in that** the forecasting process of the vapor cloud explosions (VCE) forecasting engine is additionally calibrated using computational fluid dynamics (CFD).

10. An automated maximum impact measurand forecasting system according to one of the claims 1 to 9, **characterized in that** the forecasting process of the vapor cloud explosions (VCE) forecasting engine comprises estimating the vapor cloud mass following a spill of refrigerated, high vapor pressure hydrocarbons.

11. An automated maximum impact measurand forecasting system according to claim 12, **characterized in that** the refrigerated, high vapor pressure hydrocarbons at least comprise propane and/or LNG (LNG spill).

12. An automated maximum impact measurand forecasting system according to one of the claims 1 to 11, **characterized in that** the forecasting system further comprises a vessel size estimation engine generating estimated vessel size values based on unit throughputs for corresponding projects and construction risks.

13. An automated maximum impact measurand forecasting system according to claim 12, **characterized in that** the vessel size estimation engine comprises means for generating vessel volume parameter values for spherical, cylindrical vessels with different end covers.

14. An automated maximum impact measurand forecasting system according to claim 13, **characterized in that** the vessel size estimation engine comprises a thermal radiation modeling structure for data processing.

15. An automated maximum impact measurand forecasting system according to one of the claims 1 14, **characterized in that** high pressure vessels at least comprising metallic vessel and/or thick metallic liner hoop wrapped with a fiber - resin composite and/or metallic liner fully wrapped with fiber - resin composite and/or polymer liner fully wrapped with fiber - resin composite.

16. An automated maximum impact measurand forecasting system according to one of the claims 1 to 15, **characterized in that** the generated values are assigned to and stored with extra data/exchange rates.

17. An automated maximum impact measurand forecasting system according to one of the claims 1 to 16, **characterized in that** the system additionally provides value histories and/or time series of the recorded values.

18. An automated maximum impact measurand forecasting system according to one of the claims 1 to 17, **characterized in that** the system generates property damage (PD) and/or business interruption (BI) measure values based on value histories and/or saved times series of the generated values.

19. An automated maximum impact measurand forecasting system according to one of the claims 1 to 18, **characterized in that** the system matches and/or weights the generated measure values for different plant types and/or for unit types by providing automated value verification and/or benchmarking against other locations by means of a subset of filters.

20. An automated maximum impact measurand forecasting system according to one of the claims 18 or 19, **characterized in that** the BI values are represented by a profile at least comprising a BI impact value within the scenario.

## Patentansprüche

1. Automatisiertes System zur Messung und Vorhersage der maximalen Auswirkung zur Messung der Auswirkung einer Explosion eines Sprengstoffs in offenen Stahl- und/oder Beton- und/oder Stahlbetonstrukturen, wobei zumindest die Werte der Belastungs- und/oder Widerstandsmessparameter durch das automatisierte Vorhersagesystem gemessen und/oder erfasst werden, wobei die den Sprengstoff kennzeichnenden Belastungsparameter zumindest die Menge des Sprengstoffs und/oder das TNT-Äquivalent des Sprengstoffs und/oder das Durchmesser- und/oder Höhenverhältnis und/oder die Zündpunktposition und/oder das Geomaterial als Hülle und/oder das Geomaterial als Plattenabdeckung umfassen, und wobei die Widerstandsparameter, die das Objekt oder die Struktur kennzeichnen, zumindest das Material und/oder die Materialfestigkeit und/oder die Materialdichte und/oder die Materialzusammensetzung und/oder den Stahlfasergehalt von Beton und/oder den Stabdurchmesser und/oder die Maschenweite und/oder den Stababstand und/oder die Beton-/Stahlabdeckung umfassen, wobei
das automatisierte System eine Datenerfassungseinheit umfasst, die Belastungs- und Widerstandsparameter von Mess- und Sensorvorrichtungen und/oder internen oder externen Datenbanken erfasst, wobei die Belastungs- und Widerstandsparameter zumindest Objekt-/Strukturstandortparameter und Sprengstoffstandortparameter und/oder Karten-/Geometrieparameter und/oder die Menge des Sprengstoffs und/oder das TNT-Äquivalent des Sprengstoffs umfassen,
wobei die Datenerfassungseinheit einen Objekt- oder Strukturplangenerator zum Erzeugen eines Lageplans des Objekts oder der Struktur umfasst, wobei der Lageplan aus vordefinierten und anpassbaren digitalen Formen besteht, die zumindest Gebäude und/oder Standorteinheiten und/oder Tanklager eines Objekts oder einer Struktur darstellen, wobei die anpassbaren digitalen Formen zumindest digitale Polygone und/oder Rechtecke und/oder Kreise umfassen, die zumindest Gebäude und/oder Standorteinheiten und/oder Tanklager eines Objekts oder einer Struktur darstellen,
wobei das automatisierte System eine Prognose-Engine für Dampfwolkenexplosionen (VCE) umfasst, die eine Materialdatenbank umfasst, die zumindest Folgendes umfasst: Eigenschaftsparameter von Sprengstoffen, die möglicherweise an Explosionen und Tankbränden beteiligt sind, Vorhersagewerte für die Ausbreitung von Dampfwolkenexplosionen basierend auf geometrischen Details von Hindernissen, auf die die Dampfwolke wahrscheinlich trifft, und vorhergesagte Turbulenzparameter, die den Hindernissen zugeordnet sind,
wobei das automatisierte System eine Simulations-Engine für Brüche von Hochdruckgeräten (HPR) umfasst, wobei die Brüche zumindest Brüche betreffen, die mit Hochdruckbehältern in Verbindung stehen, zumindest basierend auf den Materialien und/oder der Topologie und/oder den Prozesstechniken und/oder dem Verbundstoffaufbau und/oder den Wicklungswinkeln der Hochdruckbehälter,
**dadurch gekennzeichnet, dass** das automatisierte System eine Prognose-Engine für Wärmestrahlung (TR) umfasst, wobei die Prognose-Engine für Wärmestrahlung (TR) für den Modellierungsprozess der Wärmestrahlung Linien konstanter Wärmestrahlungsintensitäten erzeugt, die eine Bewertung der Brandausbreitung und/oder der Strahlungsintensität ermöglichen, wobei die Linien konstanter Wärmestrahlungsintensitäten als konzentrische Kreise konstanter Wärmestrahlungsintensitäten erzeugt werden, und
dadurch dass quantifizierte Messparameterwerte der Auswirkungsstärke für ein definiertes zukünftiges Zeitfenster dadurch bereitgestellt werden, dass das System zumindest (i) die Druckwirkung einer potenziellen Explosion durch die Prognose-Engine für Dampfwolkenexplosionen (VCE) und/oder die Simulations-Engine für Brüche von Hochdruckgeräten (HPR) und/oder (ii) den Schweregrad eines potenziellen Tankbrandes durch die Prognose-Engine für Wärmestrahlung (TR) bewertet, wobei die Auswirkungsstärke szenariospezifisch durch Variation der erfassten Parameter gemessen wird.

2. Automatisiertes System zur Messung und Vorhersage der maximalen Auswirkung nach Anspruch 1, **dadurch gekennzeichnet, dass** die Materialparameter zumindest offenen Stahl und/oder Beton und/oder Stahlbeton und/oder Holzart und/oder Ziegelart und/oder Steinart umfassen.

3. Automatisiertes System zur Messung und Vorhersage der maximalen Auswirkung nach einem der Ansprüche 1 oder 2, **dadurch gekennzeichnet, dass** die Prognose-Engine für Wärmestrahlung (TR) Sicherheitszonen-Parameterwerte bereitstellt, die die Anfahrts- und Zugangsinfrastruktur der Feuerwehr erfassen.

4. Automatisiertes System zur Messung und Vorhersage der maximalen Auswirkung nach einem der Ansprüche 1 bis 3, **dadurch gekennzeichnet, dass** die vordefinierten und anpassbaren digitalen Formen als lichtdurchlässige oder transparente digitale Objekte generierbar sind.

5. Automatisiertes System zur Messung und Vorhersage der maximalen Auswirkung nach einem der Ansprüche 1 bis 4, **dadurch gekennzeichnet, dass** der Plangenerator zumindest Pläne oder Bilder eines Objekts oder einer Struktur, die zumindest aus *.dwg- und/oder *bmp- und/oder *jpg- und/oder *tif- und/oder *.tiffund/oder *.gif- und/oder .kml- und/oder EML5.0-Dateien bestehen, scannt und über die Datenschnittstelle importiert.

6. Automatisiertes System zur Messung und Vorhersage der maximalen Auswirkung nach einem der Ansprüche 1 bis 5, **dadurch gekennzeichnet, dass** die Datenerfassungseinheit über die Datenschnittstelle empfangene Signale verarbeitet, wobei die Signale reale physikalische Bedingungen messen, indem die Signale abgetastet und die resultierenden Proben in digitale numerische Werte umgewandelt werden, die von der Prognose-Engine für Dampfwolkenexplosionen (VCE) und/oder der Simulations-Engine für Brüche von Hochdruckgeräten (HPR) und/oder der Prognose-Engine für Wärmestrahlung (TR) weiterverarbeitet werden.

7. Automatisiertes System zur Messung und Vorhersage der maximalen Auswirkung nach Anspruch 6, **dadurch gekennzeichnet, dass** die Datenerfassungseinheit zur Verarbeitung von über die Datenschnittstelle empfangenen Signalen ferner Sensoren zur Umwandlung physikalischer Parameter in elektrische Signale und/oder eine Signalaufbereitungsschaltung zur Umwandlung von Sensorsignalen in eine in digitale Werte umwandelbare Form und/oder Analog-DigitalWandler zur Umwandlung aufbereiteter Sensorsignale in digitale Werte umfasst.

8. Automatisiertes System zur Messung und Vorhersage der maximalen Auswirkung nach einem der Ansprüche 1 bis 7, **dadurch gekennzeichnet, dass** das Vorhersagesystem ferner eine Simulations-Engine umfasst, die prognostizierte monetäre Verluste, die durch eine Explosion verursacht werden, und prognostizierte zugehörige maximal mögliche Verlust (MPL)-Werte bereitstellt, wobei die Simulations-Engine einen Kostenparameterwert für eine Abdeckung des prognostizierten maximal möglichen Verlusts (MPL) im Falle des Auftretens eines Explosionsereignisses erzeugt.

9. Automatisiertes System zur Messung und Vorhersage der maximalen Auswirkung nach einem der Ansprüche 1 bis 8, **dadurch gekennzeichnet, dass** der Vorhersageprozess der Prognose-Engine für Dampfwolkenexplosionen (VCE) zusätzlich unter Verwendung von numerischer Strömungsdynamik (CFD) kalibriert wird.

10. Automatisiertes System zur Messung und Vorhersage der maximalen Auswirkung nach einem der Ansprüche 1 bis 9, **dadurch gekennzeichnet, dass** der Vorhersageprozess der Prognose-Engine für Dampfwolkenexplosionen (VCE) die Schätzung der Dampfwolkenmasse nach einem Austritt von gekühlten Kohlenwasserstoffen mit hohem Dampfdruck umfasst.

11. Automatisiertes System zur Messung und Vorhersage der maximalen Auswirkung nach Anspruch 12, **dadurch gekennzeichnet, dass** die gekühlten Kohlenwasserstoffe mit hohem Dampfdruck zumindest Propan und/oder LNG (LNG-Leckage) umfassen.

12. Automatisiertes System zur Messung und Vorhersage der maximalen Auswirkung nach einem der Ansprüche 1 bis 11, **dadurch gekennzeichnet, dass** das Vorhersagesystem ferner eine Schätzungs-Engine für die Behältergröße umfasst, die geschätzte Behältergrößenwerte basierend auf Einheitsdurchsätzen für entsprechende Projekte und Konstruktionsrisiken erzeugt.

13. Automatisiertes System zur Messung und Vorhersage der maximalen Auswirkung nach Anspruch 12, **dadurch gekennzeichnet, dass** die Schätzungs-Engine für die Behältergröße Mittel zur Erzeugung von Behältervolumen-Parameterwerten für kugelförmige, zylindrische Behälter mit unterschiedlichen Endabdeckungen umfasst.

14. Automatisiertes System zur Messung und Vorhersage der maximalen Auswirkung nach Anspruch 13, **dadurch gekennzeichnet, dass** die Schätzungs-Engine für die Behältergröße eine Wärmestrahlungsmodellierungsstruktur für die Datenverarbeitung umfasst.

15. Automatisiertes System zur Messung und Vorhersage der maximalen Auswirkung nach einem der Ansprüche 1 14, **dadurch gekennzeichnet, dass** Hochdruckbehälter zumindest einen Metallbehälter und/oder einen dicken metallischen Auskleidungsrahmen, der mit einem Faser-Harz-Verbundstoff umwickelt ist, und/oder eine metallische Auskleidung, die vollständig mit einem Faser-Harz-Verbundstoff umwickelt ist, und/oder eine Polymerauskleidung, die vollständig mit einem Faser-Harz-Verbundstoff umwickelt ist, umfassen.

16. Automatisiertes System zur Messung und Vorhersage der maximalen Auswirkung nach einem der Ansprüche 1 bis 15, **dadurch gekennzeichnet, dass** die erzeugten Werte mit zusätzlichen Daten/Umrechnungskursen verknüpft und gespeichert sind.

17. Automatisiertes System zur Messung und Vorhersage der maximalen Auswirkung nach einem der Ansprüche 1 bis 16, **dadurch gekennzeichnet, dass** das System zusätzlich Wertehistorien und/oder Zeitreihen der aufgezeichneten Werte bereitstellt.

18. Automatisiertes System zur Messung und Vorhersage der maximalen Auswirkung nach einem der Ansprüche 1 bis 17, **dadurch gekennzeichnet, dass** das System Sachschaden- (PD) und/oder Betriebsunterbrechungs-(BI)-Messwerte basierend auf Wertehistorien und/oder gespeicherten Zeitreihen der erzeugten Werte erzeugt.

19. Automatisiertes System zur Messung und Vorhersage der maximalen Auswirkung nach einem der Ansprüche 1 bis 18, **dadurch gekennzeichnet, dass** das System die erzeugten Messwerte für verschiedene Anlagentypen und/oder für Einheitentypen durch Bereitstellung einer automatisierten Wertüberprüfung und/oder einer vergleichenden Bewertung gegenüber anderen Standorten mittels einer Teilmenge von Filtern abgleicht und/oder gewichtet.

20. Automatisiertes System zur Messung und Vorhersage der maximalen Auswirkung nach einem der Ansprüche 18 oder 19, **dadurch gekennzeichnet, dass** die BI-Werte durch ein Profil dargestellt werden, das zumindest einen BI-Auswirkungswert innerhalb des Szenarios umfasst.

## Revendications

1. Système automatisé de prévision de mesurande d'impact maximum destiné à mesurer un impact d'une explosion d'un explosif dans des structures en acier non calmé et/ou en béton et/ou béton armé, dans lequel au moins des valeurs de paramètre de mesure de chargement et/ou de résistance sont mesurées et/ou capturées par le système automatisé de prévision, dans lequel les paramètres de chargement caractérisant l'explosif comprennent au moins une quantité d'explosif et/ou un équivalent TNT d'explosif et/ou un diamètre et/ou un rapport de hauteur et/ou une position de point d'allumage et/ou un géomatériau en tant qu'enveloppe et/ou un géomatériau en tant que couverture de plaque, et dans lequel les paramètres résistance caractérisant l'objet ou la structure comprennent au moins un matériau et/ou une résistance de matériau et/ou une densité de matériau et/ou une composition de matériau et/ou une teneur en fibres d'acier de béton et/ou un diamètre de barre et/ou une taille de maille et/ou une distance de barre et/ou une couverture en béton/acier, dans lequel
le système automatisé comprend une unité d'acquisition de données capturant un paramètre de chargement et de résistance à partir de dispositifs de mesure et capteurs et/ou de bases de données internes ou externes, les paramètres de chargement et de résistance comprenant au moins des paramètres de localisation d'objet/de structure et des paramètres de localisation d'explosif et/ou des cartes/des paramètres de géométrie et/ou une quantité d'explosif et/ou un équivalent TNT d'explosif,
dans lequel l'unité d'acquisition de données comprend un générateur de plan d'objet ou de structure destiné à générer un plan de situation de l'objet ou de la structure, le plan de situation étant composé par des formes numériques prédéfinies et réglables représentant au moins des bâtiments et/ou des unités de site et/ou des parcs de réservoir d'un objet ou d'une structure, dans lequel les formes numériques réglables comprennent au moins des polygones et/ou des rectangles et/ou des cercles numériques représentant au moins des bâtiments et/ou des unités de site et/ou des parcs de réservoir d'un objet ou d'une structure,
dans lequel le système automatisé comprend un moteur de prévision d'explosions de nuage de vapeur (« vapor cloud explosions », VCE) comprenant une base de données de matériaux comprenant au moins des paramètres de propriétés d'explosifs éventuellement impliqués dans des explosions et des incendies de réservoir, des valeurs de prévision pour la dérive d'explosions de nuage de vapeur sur la base de détails géométriques d'obstacles susceptibles d'être rencontrés par le nuage de vapeur et de paramètres de turbulence prévus associés aux obstacles,
dans lequel le système automatisé comprend un moteur de simulation de ruptures d'équipement à haute pression (« high-pressure equipment», HPR), les ruptures concernant au moins des ruptures associées à des cuves à haute pression au moins sur la base des matériaux et/ou de la topologie et/ou des techniques de procédé et/ou de la superposition composite et/ou des angles d'enroulement des cuves à haute pression,
**caractérisé en ce que** le système automatisé comprend un moteur de prévision de rayonnement thermique (« thermal radiation », TR), dans lequel, pour le procédé de modélisation du rayonnement thermique, le moteur de prévision de rayonnement thermique (TR) génère des lignes d'intensités de rayonnement de chaleur constante permettant l'évaluation de propagation d'incendie et/ou d'intensité de rayonnement, dans lequel les lignes d'intensités de rayonnement de chaleur constante sont des cercles concentriques générés d'intensités de rayonnement de chaleur constante, et
**en ce que** des valeurs de paramètre de mesure quantifiée de résistance au choc pour une fenêtre temporelle future définie sont fournies par le système au moins évaluant (i) un effet de souffle d'une explosion potentielle par le biais du moteur de prévision d'explosions de nuage de vapeur (VCE) et/ou du moteur de simulation de ruptures d'équipement à haute pression (HPR) et/ou (ii) une sévérité d'un incendie de réservoir potentiel par le biais du moteur de prévision de rayonnement thermique (TR), dans lequel la résistance au choc est mesurée de façon spécifique à des scénarios en variant des paramètres capturés.

2. Système automatisé de prévision de mesurande d'impact maximum selon la revendication 1, **caractérisé en ce que** les paramètres de matériau comprennent au moins un acier non calmé et/ou un béton et/ou un béton armé et/ou un type de bois et/ou un type de brique et/ou un type de pierre.

3. Système automatisé de prévision de mesurande d'impact maximum selon l'une des revendications 1 ou 2, **caractérisé en ce que** le moteur de prévision de rayonnement thermique (TR) fournit des valeurs de paramètre de zone de sécurité capturant une infrastructure d'approche et d'accès par des pompiers.

4. Système automatisé de prévision de mesurande d'impact maximum selon l'une des revendications 1 à 3, **caractérisé en ce que** les formes numériques prédéfinies et réglables peuvent être générées sous forme d'objets numériques translucides ou transparents.

5. Système automatisé de prévision de mesurande d'impact maximum selon l'une des revendications 1 à 4, **caractérisé en ce que** le générateur de plan effectue un balayage et une importation, par l'intermédiaire de l'interface de données, au moins de plans ou d'images d'un objet ou d'une structure, y compris au moins des fichiers *.dwg et/ou *bmp et/ou *jpg et/ou *tif et/ou *.tiff et/ou *.gif et/ou .kml et/ou EML5.0.

6. Système automatisé de prévision de mesurande d'impact maximum selon l'une des revendications 1 à 5, **caractérisé en ce que** l'unité d'acquisition de données traite des signaux reçus par l'intermédiaire de l'interface de données, les signaux mesurant des conditions physiques de monde réel, en échantillonnant les signaux et convertissant les échantillons résultants en valeurs numérales numériques qui sont traitées davantage par le moteur de prévision d'explosions de nuage de vapeur (VCE) et/ou le moteur de simulation de ruptures d'équipement à haute pression (HPR) et/ou le moteur de prévision de rayonnement thermique (TR).

7. Système automatisé de prévision de mesurande d'impact maximum selon la revendication 6, **caractérisé en ce que**, pour traiter des signaux reçus par l'intermédiaire de l'interface de données, l'unité d'acquisition de données comprend en outre des capteurs pour convertir des paramètres physiques en signaux électriques et/ou une circuiterie de conditionnement de signaux pour convertir des signaux de capteur en une forme convertible en valeurs numériques et/ou des convertisseurs analogiques-numériques pour convertir des signaux de capteur conditionnés en valeurs numériques.

8. Système automatisé de prévision de mesurande d'impact maximum selon l'une des revendications 1 à 7, **caractérisé en ce que** le système de prévision comprend en outre un moteur de simulation fournissant des pertes monétaires prévues causées par une explosion et des valeurs de perte possible maximum (« maximum possible loss », MPL) associée prévues, où le moteur de simulation génère une valeur de paramètre de coût pour une couverture de la perte possible maximum (MPL) prévue en cas de survenue d'un événement explosif.

9. Système automatisé de prévision de mesurande d'impact maximum selon l'une des revendications 1 à 8, **caractérisé en ce que** le procédé de prévision du moteur de prévision d'explosions de nuage de vapeur (VCE) est de plus calibré en utilisant une dynamique des fluides numérique (« Computational Fluid Dynamics », CFD).

10. Système automatisé de prévision de mesurande d'impact maximum selon l'une des revendications 1 à 9, **caractérisé en ce que** le procédé de prévision du moteur de prévision d'explosions de nuage de vapeur (VCE) comprend l'estimation de la masse de nuage de vapeur suivant un déversement d'hydrocarbures réfrigérés à haute pression de vapeur.

11. Système automatisé de prévision de mesurande d'impact maximum selon la revendication 12, **caractérisé en ce que** les hydrocarbures réfrigérés à haute pression de vapeur comprennent au moins du propane et/ou du GNL (déversement de GNL).

12. Système automatisé de prévision de mesurande d'impact maximum selon l'une des revendications 1 à 11, **caractérisé en ce que** le système de prévision comprend en outre un moteur d'estimation de taille de cuve générant des valeurs estimées de taille de cuve sur la base de débits unitaires pour des projets, et des risques de construction, correspondants.

13. Système automatisé de prévision de mesurande d'impact maximum selon la revendication 12, **caractérisé en ce que** le moteur d'estimation de taille de cuve comprend des moyens destinés à générer des valeurs de paramètre de volume de cuve pour des cuves sphériques, cylindriques, avec des couvertures finales différentes.

14. Système automatisé de prévision de mesurande d'impact maximum selon la revendication 13, **caractérisé en ce que** le moteur d'estimation de taille de cuve comprend une structure de modélisation de rayonnement thermique pour traitement de données.

15. Système automatisé de prévision de mesurande d'impact maximum selon l'une des revendications 1 à 14, **caractérisé en ce que** des cuves à haute pression comprennent au moins une cuve métallique et/ou une boucle de revêtement métallique épaisse enveloppée avec un composite fibre-résine et/ou un revêtement métallique entièrement enveloppé avec un composite fibre-résine et/ou un revêtement polymère entièrement enveloppé avec un composite fibre-résine.

16. Système automatisé de prévision de mesurande d'impact maximum selon l'une des revendications 1 à 15, **caractérisé en ce que** les valeurs générées sont attribuées à, et stockées avec, des données/des taux d'échange additionnels.

17. Système automatisé de prévision de mesurande d'impact maximum selon l'une des revendications 1 à 16, **caractérisé en ce que** le système fournit de plus des historiques de valeurs et/ou des séries chronologiques des valeurs enregistrées.

18. Système automatisé de prévision de mesurande d'impact maximum selon l'une des revendications 1 à 17, **caractérisé en ce que** le système génère des valeurs de mesure de dommages matériels (« property damage », PD) et/ou d'interruption d'exploitation (« business interruption », BI) sur la base d'historiques de valeurs et/ou de séries chronologiques sauvegardées des valeurs générées.

19. Système automatisé de prévision de mesurande d'impact maximum selon l'une des revendications 1 à 18, **caractérisé en ce que** le système apparie et/ou pondère les valeurs générées de mesure pour des types d'installation différents et/ou pour des types d'unité en fournissant une vérification de valeur automatisée et/ou un étalonnage contre d'autres localisations au moyen d'un sous-ensembles de filtres.

20. Système automatisé de prévision de mesurande d'impact maximum selon l'une des revendications 18 ou 19, **caractérisé en ce que** les valeurs de BI sont représentées par un profil comprenant au moins une valeur d'impact de BI au sein du scénario.
